# EUROPÄISCHE PATENTSCHRIFT

(11) **EP 3 380 203 B1**
(45) Veröffentlichungstag und Bekanntmachung des Hinweises auf die Patenterteilung: **03.06.2020**
(21) Anmeldenummer: 16804719.9
(22) Anmeldetag: 21.11.2016
(51) Int. Cl.: A63B 71/06, G06K 7/10, G07C 1/24, G06K 19/07

(54) **POSITIONSVERFOLGUNG BEI SPORTVERANSTALTUNGEN**
POSITION TRACKING AT SPORTS EVENTS
SUIVI DE POSITION POUR MANIFESTATIONS SPORTIVES

(30) Priorität: 23.11.2015 DE 102015015036
(43) Veröffentlichungstag der Anmeldung: 03.10.2018
(73) Patentinhaber: race result AG, 76327 Pfinztal (DE)
(72) Erfinder: PETERSEN, Sönke, 76131 Karlsruhe (DE); KLOHR, Nikias, 76297 Stutensee (DE)
(74) Vertreter: Durm Patentanwälte PartG mbB
(86) Internationale Anmeldenummer: PCT/EP2016/078333
(87) Internationale Veröffentlichungsnummer: WO 2017/089306

(56) Entgegenhaltungen:
- DE-A1-102009 053 872
- US-A1- 2011 043 335
- US-A1- 2012 319 822

## Beschreibung

Die vorliegende Erfindung betrifft einen Transponder sowie ein System und ein Verfahren zur Zeitmessung und Standortverfolgung.

Im Bereich der Sportzeitmessung, beispielsweise bei Laufveranstaltungen, Marathons, Radrennen, Skirennen, Motorsportrennen, Pferderennen oder anderen vergleichbaren Veranstaltungen spielt die Erfassung von Start-, Ziel- und Zwischenzeiten der Teilnehmer eine wichtige Rolle. In aktuellen Systemen zur Zeitmessung führt zur berührungslosen und automatisierten Zeitmessung eine Person, ein Fahrzeug oder ein Tier, dessen Zeit gemessen werden soll, oft ein Funkelement (z.B. einen aktiven oder passiven RFID Tag) mit sich. Laufsportler können beispielsweise Funkelemente bei sich tragen, die in eine Startnummer integriert oder am Schnürsenkel eines Schuhs befestigt sind. Im Fall von Radsportveranstaltungen ist es möglich am Lenker eines Fahrrads entsprechende Funkelemente anzubringen, bei anderen Fahrzeugen kann ein Funkelement mit der Karosserie verbunden werden.

An Start-, Ziel- und Zwischenzeitpositionen entlang einer Strecke sind Messstellen vorgesehen, die es ermöglichen ein Funkelement zu detektieren bzw. mit diesem zu kommunizieren. Eine Messstelle umfasst dazu insbesondere eine Antenne und eine entsprechende Auswerteinheit zur Ansteuerung der Antenne und zur Verarbeitung ausgetauschter Signale. Die Messstelle registriert Zeitpunkte, zu denen sich ein bestimmtes Funkelement in ihrer Nähe befindet bzw. die Messstelle passiert. Die Ermittlung eines Passierzeitpunkts, also des Moments, in dem das Funkelement die Messstelle passiert, kann auf Basis ausgetauschter Nachrichten zwischen Funkelement und Messstelle während sich das Funkelement innerhalb einer Kommunikationsreichweite der Messstelle befindet, auf verschiedene Arten erfolgen. Beispielsweise kann die Berechnung auf Basis einer Auswertung der Signalstärken ausgetauschter Nachrichten erfolgen. Die ermittelten Passierzeitpunkte werden dann an eine zentrale Auswertestelle kommuniziert. Durch eine Zusammenschau und eine Auswertung der registrierten Zeitpunkte wird eine Zeiterfassung möglich.

In diesem Zusammenhang bezeichnet ein Transponder insbesondere ein Funkelement, das sowohl das Senden als auch das Empfangen von Signalen erlaubt. Einerseits sind hierbei passive RFID Systeme zu nennen, die über keine eigene Energiequelle verfügen und als Antwort auf eine Erregung durch eine Basisstation eine eigene Kennung (ID) übermitteln. Andererseits verfügen aktive RFID Systeme üblicherweise über eine eigene Energieversorgung und ermöglichen dadurch einen vergleichsweise höheren Grad an Datenverarbeitung im Transponder. Üblicherweise erlauben aktive RFID Systeme eine höhere Präzision der Zeitmessung.

Neben der Zeitmessung besteht bei Sportveranstaltungen oft auch ein Bedürfnis an einer Standortverfolgung (hierin wird der Begriff Tracking dazu synonym verwendet) der Teilnehmer. Insbesondere im Profibereich, beispielsweise bei Marathonveranstaltungen aber auch im Breitensport, beispielsweise bei Triathlon- und IronMan-Veranstaltungen, kann durch diese Erfassung und Überwachung der Positionen der Teilnehmer (Tracking) sowohl für die Zuschauer als auch für die Athleten eine wichtige Zusatzinformation generiert werden. Unter Standortverfolgung versteht sich die Positionsüberwachung oder Lokalisierung von Transpondern, die beispielsweise von Sportlern getragen werden.

In diesem Zusammenhang besteht ein Ansatz darin, die Teilnehmer zusätzlich zum Transponder mit einem sogenannten Tracker zur Standortverfolgung auszustatten. Üblicherweise verfügen solche Tracker über ein GPS-Modul zur Standortermittlung sowie über ein GSM-Modul, um die Position in regelmäßigen Zeitabständen an die zentrale Auswertestelle zu übermitteln. Nachteilig an dieser Lösung ist der relativ hohe Energiebedarf, durch den eine relativ große Batterie nötig wird. Beispielsweise im Bereich des Profisports sind die Teilnehmer oft sehr auf eine Reduktion des Gewichts der mitgeführten Ausrüstung bedacht. So gibt es im Bereich des olympischen Sports oft eine von Funktionären vorgegebene Gewichtsobergrenze für den Transponder von 18 Gramm, wobei übliche GPS-Tracker oft ein Gewicht im Bereich von 60 Gramm haben.

Das Vorsehen einer Möglichkeit zur manuellen Aktivierung und Deaktivierung des Trackers, um Energie zu sparen, führt dabei oft dazu, dass zumindest ein Teil der Teilnehmer das Aktivieren versäumt bzw. den Tracker zu früh oder zu spät aktiviert oder deaktiviert und keine zuverlässige Standortverfolgung möglich ist. Abgesehen hiervon ist der Prozess des Wiederaufladens bei der Verwendung von Akkus oft eine zentrale Herausforderung, wenn bei einer großen Veranstaltung eine Vielzahl von Trackern eingesetzt wird. Zudem erfordert eine Schnittstelle zum Aufladen eines Akkus üblicherweise einen Stecker, der einer Wasserdichtigkeit und Robustheit der Lösung entgegenlaufen kann. Des Weiteren kann auch der Einsatz der GSM Technologie durch die vielen Teilnehmer, die sich gleichzeitig in einem Start- oder Zielbereich befinden, zu einer Netzüberlastung führen. Zuletzt verkompliziert sich die Initialisierung der Veranstaltung, da allen Teilnehmern neben dem Transponder noch ein weiteres Gerät ausgegeben werden muss, welches auch jeweils zugeordnet werden muss.

Ein weiterer Ansatz zur Standortverfolgung von Sportlern besteht in der zusätzlichen Ausgabe eines Transmitters an die Teilnehmer der Sportveranstaltung, der regelmäßig (Funk-) Signale aussendet. Diese Signale werden von Basisstationen entlang der Strecke empfangen, wobei eine Lokalisierung durch eine Triangulation der empfangenen Signale weiter verbessert werden kann. Nachteilig ist hierbei, dass ebenfalls ein zusätzliches Gerät notwendig ist, das vom Sportler getragen werden muss. Hierbei ergeben sich analog zur oben dargestellten Verwendung eines Trackers Nachteile, die aus der Verwendung einer Batterie bzw. eines Akkus, aus der Verwendung eines zusätzlichen Gerätes und/oder aus dem separaten Handling entstehen.

Ein weiterer Ansatz besteht darin, ein Tracking basierend auf dem ohnehin mitgeführten Transponder umzusetzen. Hierzu werden entlang der Strecke mehrere Messstellen zur Erfassung von Zwischenzeiten vorgesehen. Nachteilig hierbei ist, dass der Aufbau solcher Zeitnahmestellen üblicherweise einen großen Aufwand an Equipment und Personal für den Aufbau und damit hohe Kosten bedeutet, da ein engmaschiges Raster mit vielen Messstellen (beispielsweise einer Messstelle pro Kilometer) realisiert werden muss.

In EP 2 357 446 A2 werden Multi-Sensor Überwachungssysteme und Verfahren offenbart. Auf unterschiedliche Weise werden GPS-Daten genutzt und den Athleten und/oder Geräten der Athleten Daten und Informationen zur Verfügung gestellt. Die offenbarten Systeme und Verfahren können Streckeninformationen für Athleten und/oder deren Trainer bereitstellen, beispielsweise zur Vorausplanung, Zielsetzung und Kalibrierung. Solche Systeme und Verfahren können optional auch während der Laufzeit der Veranstaltung Echtzeitinformationen zur Verfügung stellen, um beispielsweise bei der Erreichung von vorher festgelegten Zielen zu unterstützen. Zudem können Daten und Informationen, die von solchen Systemen und Verfahren gesammelt wurden, auch in einer nachträglichen Analyse von Athleten und deren Trainern genutzt werden, um beispielsweise die Leistung zu analysieren und bei der Verbesserung der Leistung in der Zukunft zu helfen.

In US 2013/0231760 A1 wird ein Ansatz zum Bereitstellen von Informationen über Teilnehmer einer Veranstaltung offenbart. Ein Teilnehmer führt ein Teilnehmergerät mit sich, das beim Passieren eines Checkpunkts per RFID eine Veranstaltungszeitinformation sowie eine Identifizierungsinformation empfängt. Basierend darauf und auf einer Teilnehmerzeitinformation wird dem Teilnehmer eine Zeitmessinformation angezeigt. Der Teilnehmer trägt einerseits ein Gerät am Handgelenk und andererseits ein RFID-Gerät am Fuß. Das Gerät am Fuß dient zur Kommunikation mit einem RFID-Reader. Sobald von einer Messstelle eine Zeitmessinformation erhalten wurde, wird diese in einem "internen" Sendevorgang mittels eines ANT-Transceivers an das Gerät am Handgelenk weitergesendet. Keines der Geräte des Teilnehmers wird entlang der Strecke lokalisiert.

In US 2013/0285794 A1 werden ein System sowie ein Verfahren zur Verfolgung einer Position eines Teilnehmers während einer Veranstaltung offenbart. Ein Teilnehmer führt einen RIFD Tag mit sich, der mit einem Lokalisierungstag verbunden ist. Dieser Lokalisierungstag empfängt Lokalisierungsdaten von einer Lokalisierungsquelle, insb. von einem GPS-System, und übermittelt diese periodisch über ein Detektionssystem einer Messstelle an ein Zeitmesssystem. Die Position des Teilnehmers wird im Lokalisierungstag des Teilnehmers ermittelt und weitergeleitet. Der vergleichsweise hohe Energiebedarf des GPS-Empfängers sowie die Verwendung eines vom RFID Tag getrennt ausgeführten Lokalisierungstags werden in Kauf genommen. Die Position der Messstelle ist nicht bekannt.

Aus der Druckschrift US 2011/043335 A1 ist ein Verfahren zum Betrieb eines RFID-Transponders bekannt, das sich dadurch auszeichnet, dass der RFID-Transponder entweder in einem Broadcast-Modus oder in einem bidirektionalen Response-Modus oder in beiden vorgenannten Modi gleichzeitig betrieben wird. Für den Betrieb in diesen zwei Modi ist der RFID-Transponder sowohl mit einer drahtlosen Sendeeinrichtung als auch mit einer drahtlosen Sende-/Empfangseinrichtung ausgerüstet, die unabhängig voneinander betreibbar sind. Die Druckschrift US 2012/319822 A1 zeigt ein System und Verfahren zum Ermitteln einer Passierzeit an einer Referenzlinie eines sich entlang einer Route bewegenden RFID-Transponders und zum Ermitteln eines Zeitverlaufs des RFID-Transponders auf der Route. Das System weist eine Vielzahl von beabstandeten Transponder-Lesesystemen zum drahtlosen Empfangen einer Transpondernachricht auf, wobei mindestens eines der Transponder-Lesesysteme von der Referenzlinie beabstandet ist.

Zusammenfassend gibt es bisher keine praktikable und zufriedenstellende Lösung, um eine Standortverfolgung in solchen Veranstaltungen zu realisieren. Alle bisherigen Lösungen haben Nachteile bezüglich der Handhabbarkeit (Initialisierungs- bzw. Aufbauaufwand, Aufladen vieler Geräte, etc.), der Fehleranfälligkeit (manueller Input der Teilnehmer erforderlich, Aufladen erforderlich wegen eines hohen Energieverbrauchs, Netzüberlastung, etc.), der Robustheit (Ladestecker erforderlich aufgrund eines hohen Energieverbrauchs, sodass kein wasserdichtes Gehäuse realisiert werden kann, etc.), und/oder der Kosten (Systemkosten, Aufbauaufwand, Transportkosten etc.), sodass bisher nur selten ein Tracking verwendet wird. Die vorliegende Erfindung hat daher die Aufgabe, eine Möglichkeit zur Zeitmessung und Standortverfolgung zu schaffen. Insbesondere hat die vorliegende Erfindung die Aufgabe, die Systeme des Standes der Technik bezüglich des Energieverbrauchs, des Bedien- und Verwendungskomforts, der Zuverlässigkeit und der Systemkosten zu verbessern.

Gemäß einem Aspekt betrifft die vorliegende Erfindung zur Lösung dieser Aufgabe einen mobilen Transponder zur Zeitmessung und Standortverfolgung, mit:
einer Empfangseinheit zum Empfangen einer Nachricht beim Passieren einer Messstelle;
einem Prozessor zum Auswerten der Nachricht, um einen Verfolgungsmodus zu aktivieren, wenn die Nachricht eine Aktivierungsinformation enthält, und um einen Passierzeitpunkt der Messstelle zu ermitteln, wenn die Nachricht eine Zeitmessinformation enthält; und
einer Sendeeinheit zum periodischen Aussenden eines Verfolgungspakets mit einer Identitätsinformation zum Empfang durch eine Verfolgungsstation mit bekannter Position in Kommunikationsreichweite, wenn der Verfolgungsmodus aktiviert ist, und zum Übermitteln des Passierzeitpunkts an die Messstelle.

Gemäß einem weiteren Aspekt betrifft die vorliegende Erfindung ein System zur Zeitmessung und Standortverfolgung, mit:
einem mobilen Transponder wie zuvor beschrieben;
mindestens einer Messstelle zum drahtlosen Übertragen einer Zeitmessinformation und einer Aktivierungsinformation in mindestens einer Nachricht an den Transponder beim Passieren der mindestens einen Messstelle;
einer Verfolgungsstation mit bekannter Position zum Empfangen des Verfolgungspakets von einem Transponder in Kommunikationsreichweite und zum Übermitteln eines Detektionspakets mit der Identitätsinformation und einer Positionsinformation der Verfolgungsstation an eine Zentralstation; und
einer Zentralstation zum Ermitteln eines Standorts des Transponders basierend auf dem Detektionspaket.

Gemäß einem weiteren Aspekt betrifft die vorliegende Erfindung ein Verfahren zur Zeitmessung und Standortverfolgung, mit den Schritten:
Empfangen einer Nachricht beim Passieren einer Messstelle;
Auswerten der Nachricht, um einen Verfolgungsmodus zu aktivieren, wenn die Nachricht eine Aktivierungsinformation enthält, und um einen Passierzeitpunkt der Messstelle zu ermitteln, wenn die Nachricht eine Zeitmessinformation enthält; und
periodisches Aussenden eines Verfolgungspakets mit einer Identitätsinformation zum Empfang durch eine Verfolgungsstation mit bekannter Position in Kommunikationsreichweite, wenn der Verfolgungsmodus aktiviert ist, und Übermitteln des Passierzeitpunkts an die Messstelle.

Gemäß einem Aspekt betrifft die Erfindung ein Computerprogrammprodukt mit einem Datenträger, auf dem Programmcode gespeichert ist, der dazu ausgebildet ist, ein Verfahren mit den Schritten wie oben beschrieben auszuführen, wenn der Programmcode ausgeführt wird.

Bevorzugte Ausgestaltungen der Erfindung werden in den abhängigen Ansprüchen beschrieben. Es versteht sich, dass der Transponder, das Verfahren, das System und das Computerprogrammprodukt entsprechend der für den Transponder bzw. für das System in den abhängigen Ansprüchen beschriebenen Ausgestaltungen ausgeführt sein können.

Die Empfangseinheit des erfindungsgemäßen Transponders kommuniziert drahtlos mit einer Messstelle, sobald sich der Transponder in einem Kommunikationsradius der Messstelle befindet. Beim Passieren, also während sich der Transponder im Kommunikationsradius der Messstelle befindet, empfängt der Transponder mindestens eine Nachricht von der Messstelle. Auf Basis einer Verarbeitung dieser Nachricht erfolgen - je nachdem, ob die Nachricht eine Zeitmessinformation und/oder eine Aktivierungsinformation enthält - eine Zeitmessung und/oder eine Aktivierung einer Standortverfolgung.

Zur Zeitmessung werden zumeist mehrere Nachrichten empfangen, auf deren Basis im Transponder ein Passierzeitpunkt bestimmt werden kann. Der Passierzeitpunkt bzw. die Berechnung des Passierzeitpunkts entspricht zumeist der Festlegung eines Zeitpunkts oder einer Nachricht, bei der die Distanz zwischen der Messstelle und dem Transponder minimal ist, also zum Beispiel eine Start- oder Ziellinie überschritten wird. Der Passierzeitpunkt wird mittels einer Sendeeinheit des Transponders zur weiteren Verarbeitung an die Messstelle übermittelt. Die Messstelle umfasst demnach einerseits eine Sendeeinheit, mit der die Nachricht gesendet wird, und andererseits eine Empfangseinheit, mit der der Passierzeitpunkt eines passierenden Transponders empfangen wird.

Zur Standortverfolgung ist der Prozessor dazu konfiguriert, einen Verfolgungsmodus zu aktivieren, wenn die Nachricht eine Aktivierungsinformation enthält. Wenn dieser Verfolgungsmodus aktiviert ist, wird von der Sendeeinheit des Transponders periodisch ein Verfolgungspaket ausgesendet. Hierbei wird das Verfolgungspaket bevorzugt drahtlos als Broadcastpaket ausgesendet, also als Nachricht an alle möglichen Empfänger innerhalb eines Kommunikationsradius der Sendeeinheit. Das Verfolgungspaket wird vorzugsweise an eine spezielle Tracking-Broadcast-Adresse gesendet, die logisch vollständig vom Nachrichtenverkehr für die Zeitmessung getrennt ist. Hierdurch kann sichergestellt werden, dass auch eine große Anzahl an Transpondern mit aktiviertem Verfolgungsmodus, die periodisch Verfolgungspakete senden, nicht die eigentliche Zeitmessung (bzw. die Übermittlung der Passierzeitpunkte) gefährden. Das Verfolgungspaket enthält eine Identitätsinformation des Transponders. Diese Identitätsinformation entspricht einer eindeutigen Kennung des Transponders und erlaubt es, den Transponder zu identifizieren bzw. von anderen Transpondern zu unterscheiden. Das Verfolgungspaket wird von einer Verfolgungsstation, die sich entlang der Strecke befindet und deren Position bekannt ist, empfangen. Auf Basis der Identitätsinformation kann die Verfolgungsstation feststellen von welchem Transponder das Verfolgungspaket stammt. In anderen Worten wird also die Anwesenheit des Transponders in einem Kommunikationsradius der Verfolgungsstation detektiert. Hierzu ist keine Signalisierung von einer Messstelle zum Transponder notwendig, sodass der vergleichsweise aufwändige Aufbau einer Messstelle nicht erforderlich ist.

Unter einer bekannten Position der Verfolgungsstation wird hierin verstanden, dass die Position relativ zur Strecke bzw. relativ zur Umgebung eindeutig zuordenbar (bekannt) ist. In anderen Worten sind (absolute oder relative) geografische Koordinaten der Verfolgungsstation bekannt. Vorzugsweise verfügt die Verfolgungsstation zum Ermitteln ihrer Position über einen GPS- oder anderen Satellitenempfänger. Ebenfalls ist es möglich, dass die Position der Verfolgungsstation bei einem Initialisierungsvorgang, beispielsweise durch Bedienpersonal beim Ausbringen, manuell oder automatisch vorgegeben wird. Die Position einer Verfolgungsstation kann auch nachträglich festgelegt bzw. zugewiesen werden. Die Verfolgungsstation übermittelt dann lediglich eine Identifizierungsinformation (ID der Verfolgungsstation), basierend auf der ihr im Nachhinein, vorzugsweise in der Zentralstation, eine Position zugeordnet werden kann. Beispielsweise kann die Position dann manuell anhand einer Karte ermittelt werden. Dies kann insbesondere in einem Innen-Szenario in einem Gebäude mit keinem oder eingeschränktem GPS-Empfang oder in einem gemischten Innen-Außen-Szenario vorteilhaft sein.

Die Verfolgungsstation kommuniziert sowohl die Identitätsinformation des Transponders als auch eine Information zur Position bzw. zur Identität der Verfolgungsstation an eine Zentralstation. In der Zentralstation kann auf der Basis dieser Daten bzw. aus einer Zusammenschau mehrerer Verfolgungspakete, die vom selben Transponder zu verschiedenen Zeiten durch verschiedene Verfolgungsstationen mit bekannten Positionen empfangen wurden, eine Standortverfolgung durchgeführt werden. Beispielsweise kann zwischen den Positionen zweier Verfolgungsstationen interpoliert werden, um so eine Schätzung der Position des Transponders zu erreichen. Üblicherweise sind entlang einer vordefinierten Strecke mehrere Verfolgungsstationen stationär installiert. In der Zentralstation können auch die gemessenen Zeiten bzw. die Positionen der Messstellen berücksichtigt werden.

Der erfindungsgemäße Transponder erlaubt demnach eine simultane Zeitmessung und Standortverfolgung in einem Gerät. Im Vergleich zu bisherigen Systemen wird für die Standortverfolgung kein zusätzliches mitzuführendes Gerät benötigt, da die Funktionalitäten der Zeitmessung und Standortverfolgung kombiniert ausgeführt sind. In anderen Worten handelt es sich bei dem mobilen Transponder um einen herkömmlichen Transponder zur Zeitmessung, bei dem eine Funktion zur Standortverfolgung integriert ist. Hieraus ergeben sich Vorteile beim Handling, bei den Kosten und beim Komfort für Veranstalter und Teilnehmer. Insbesondere stellen der Transponder und das System gemäß der vorliegenden Erfindung eine einzigartige Lösung des Problems der Standortverfolgung unter den realen Anforderungen einer Sportveranstaltung dar.

Die zusätzlich erforderlichen Verfolgungsstationen können gegenüber herkömmlichen Messstellen für die Zeitmessung einfacher, kostengünstiger und robuster ausgestaltet sein. Eine Verfolgungsstation kann unauffällig entlang einer vorher bekannten Strecke ausgebracht werden und unbeaufsichtigt und bei überschaubarem Verlustrisiko eine Standortverfolgung ermöglichen. Die Verfolgungsstationen können schnell und effizient entlang der Strecke ausgebracht werden, sodass im Vergleich zum Aufbau von Messstellen wesentlich weniger Personal notwendig ist. Während des Durchführens der Veranstaltung ist üblicherweise keine Intervention notwendig. Der erfindungsgemäße Ansatz zur Standortverfolgung erlaubt damit eine effiziente und einfache Handhabung beim Auf- und Abbau und bei der Durchführung einer Veranstaltung.

Der Verfolgungsmodus, in dem periodisch eine Nachricht gesendet wird und in dem daher der Energieverbrauch vergleichsweise hoch ist, wird durch die Aktivierungsinformation gezielt beim Passieren einer Messstelle aktiviert. Hierdurch ergibt sich eine Verringerung des Energieverbrauchs gegenüber Systemen, bei denen die Standortverfolgung nicht gezielt an- oder abgeschaltet werden kann. Die Batterie wird nur belastet, wenn dies notwendig ist. Es ist nicht erforderlich, dass die Personen, deren Standort verfolgt werden soll, selbst eine Aktivierung durchführen und diese möglicherweise vergessen. Die - ohnehin vorhandene - Zeitmesstechnik wird zur Aktivierung der Standortverfolgung benutzt. In einem Transponder ist sozusagen eine Transmitterfunktion integriert, die über die Zeitmesstechnik gesteuert (z.B. Aktivierung/Deaktivierung/Konfiguration) werden kann.

Der erfindungsgemäße Transponder benötigt im Vergleich zu Systemen des Standes der Technik (beispielsweise herkömmliche Tracker mit einem Satellitenempfänger) weniger Energie und damit eine wesentlich kleinere Batterie. Der erfindungsgemäße Transponder kann daher leichter und kostengünstiger ausgeführt werden. Durch die gezielte Aktivierung wird die Verwendung eines wiederaufladbaren Energiespeichers vermieden. Insbesondere ist der Energieverbrauch so gering, dass eine vergleichsweise kleine Energiequelle einen Einsatz des Transponders über mehrere Jahre erlaubt. Hierdurch ergeben sich Vorteile bezüglich Robustheit, Kosten und Handling. Insbesondere kann der Transponder leicht, wasserdicht und robust konstruiert werden, sodass er beispielsweise auch bei IronMan Veranstaltungen (also teilweise unter Wasser) eingesetzt werden kann.

Des Weiteren funktioniert ein Satellitenempfänger, wie er bei herkömmlichen GPS-Trackern eingesetzt wird, prinzipbedingt nicht oder nur schlecht im Inneren von Gebäuden sowie an anderen Stellen mit eingeschränktem GPS-Empfang, beispielsweise in Häuserschluchten, Tunneln, Höhlen, Schluchten oder dichten Wäldern. Die vorliegende Erfindung erlaubt auch in solchen Umgebungen eine Standortverfolgung.

Das Systemkonzept der vorliegenden Erfindung erlaubt eine Standortverfolgung mit relativ geringem Material- sowie Auf- und Abbauaufwand im Vergleich zu anderen Lösungen. Daher eignet sich das System zum Transport und zum mobilen Einsatz.

Die vorliegende Erfindung basiert auf dem Gedanken, dass eine ohnehin vorhandene Infrastruktur für die Zeitmessung (Transponder und Zeitmessstellen) auch für eine Standortverfolgung eingesetzt wird. Die dabei verwendeten Transponder sind klein und leicht und müssen ohnehin von den Athleten mitgeführt werden. Die verwendeten Verfolgungsstationen können im Vergleich zu Messstellen mit einem wesentlich geringeren Aufwand und zu wesentlich geringeren Kosten realisiert werden. Ebenfalls ergibt sich die Möglichkeit zu einem effizienten Auf- und Abbau.

Gemäß einer bevorzugten Ausgestaltung ist die Empfangseinheit des Transponders zum Auswerten eines induktiven Feldes und zum Empfangen einer Nachricht auf Basis einer Modulation des induktiven Feldes ausgebildet. Eine Messstelle erzeugt ein induktives Feld. Hierzu ist üblicherweise eine Drahtschleife vorgesehen, die auf dem Boden ausgelegt wird und die der Transponder beim Passieren überquert. Dieses Feld wird moduliert. Die Empfangseinheit des Transponders erlaubt die Auswertung bzw. den Empfang des induktiven Feldes und kann dabei eine Modulation des induktiven Feldes messen. Je nach Art der Modulation kann durch dieses Prinzip eine Nachrichtenübertragung erfolgen. Ein Vorteil der Verwendung eines induktiven Feldes liegt in dem relativ geringen Energieverbrauch einer entsprechenden Empfangseinheit sowie in der relativ hohen Reichweite, wenn zur Erzeugung des induktiven Feldes ausreichend Energie zur Verfügung steht. Dies ist im Sportbereich aber auch in verschiedenen weiteren Anwendungsbereichen sinnvoll, da der mobile Transponder mitgeführt werden muss, wohingegen die Messstelle zumeist stationär bleiben kann. Ein weiterer Vorteil der Nachrichtenübertragung mittels eines induktiven Feldes liegt darin, dass das induktive Feld mit 1/x³ abfällt, wobei x den Abstand zwischen dem Transponder und der Drahtschleife bezeichnet, und dadurch räumlich gut abgrenzbar ist. Die Aktivierung des Verfolgungsmodus des Transponders kann daher in einem räumlich genau definierten Bereich erfolgen. Es wird sozusagen ein manueller und damit fehleranfälliger Schalter, den der Sportler beim Start bzw. beim Überschreiten einer Startlinie drücken muss, durch eine sichere Aktivierung des Verfolgungsmodus mittels der Drahtschleife auf der Strecke ersetzt. Diese Aktivierung entspricht in anderen Worten einem automatischen Ein-/Aus-Schalter.

In einer Ausgestaltung des mobilen Transponders ist die Empfangseinheit als Aufwach-Empfänger zum Aufwecken des Prozessors aus einem Energiesparmodus bei Erhalt der Nachricht ausgebildet. Ein Aufwach-Empfänger umfasst dabei eine Schaltung, die dazu ausgebildet ist, durch ein elektromagnetisches oder induktives Feld zumindest von einem Schlafmodus mit reduziertem oder sehr geringem Energieverbrauch in einen Wachmodus mit höherem Energieverbrauch versetzt zu werden. Beispielsweise kann mit einem Aufwach-Empfänger bei sehr geringem Energieverbrauch sichergestellt werden, dass eine Nachricht empfangen wird und einem Prozessor ein Aufwachsignal zum Auswerten der Nachricht übermittelt wird. Insgesamt ergibt sich hierdurch ein deutlich reduzierter Energieverbrauch gegenüber einem Empfänger, der ständig empfangsbereit sein muss, um keine Nachricht zu verpassen.

In einer weiteren Ausgestaltung des mobilen Transponders ist der Prozessor dazu ausgebildet den Verfolgungsmodus zu deaktivieren, wenn
die Nachricht eine Deaktivierungsinformation enthält;
die Nachricht für eine erste vordefinierte Zeitperiode keine Aktivierungsinformation enthält; und/oder
ein Energievorrat des mobilen Transponders unter einen vorbestimmten Schwellwert fällt. Durch die Deaktivierung des Verfolgungsmodus wird der Energieverbrauch minimiert. Eine Deaktivierungsinformation kann analog zur Aktivierungsinformation in einer Nachricht einer Zeitmessstelle übermittelt werden. Beispielsweise kann beim Passieren einer Messstelle im Zielbereich einer Sportveranstaltung eine Nachricht mit einer Deaktivierungsinformation übermittelt werden. Durch das Abstellen auf den Erhalt einer Aktivierungsinformation ergibt sich eine Auszeit-Funktion (Timeout Funktion). Wenn über eine bestimmte Zeitperiode keine Nachricht mit einer Aktivierungsinformation empfangen wird, wird der Verfolgungsmodus deaktiviert. Durch das Abstellen auf einen Energievorrat des mobilen Transponders und einen Schwellwert (wenn also beispielsweise die Batteriespannung unter einen Spannungsschwellwert fällt), kann eine Priorisierung der Zeitmessfunktion des Transponders gegenüber der Standortverfolgungsfunktion des Transponders erreicht werden. Selbst wenn die Energie nicht mehr ausreicht, um die Standortverfolgung zu gewährleisten, kann die Zeitmessung immer noch durchgeführt werden. Die genannten Möglichkeiten den Verfolgungsmodus zu deaktivieren, können dabei jeweils einzeln aber auch in Kombination verwendet werden. Hierdurch ergibt sich der Vorteil, dass der Energieverbrauch des mobilen Transponders geringgehalten wird und insbesondere gegenüber bisherigen Lösungen deutlich reduziert werden kann. Vorzugsweise ist der Verfolgungsmodus optional und nur während einer Veranstaltung aktiv, bei der eine Standortverfolgung der Teilnehmer erfolgen soll.

In einer weiteren Ausgestaltung enthält das Verfolgungspaket eine Zählerinformation zur zeitlichen Einordnung gegenüber weiteren Verfolgungspaketen. Eine Zählerinformation kann dabei insbesondere eine fortlaufende Nummer sein, die in nacheinander ausgesendeten Verfolgungspaketen desselben Transponders jeweils inkrementiert wird. Hierdurch ist es möglich eine doppelte Detektion desselben Verfolgungspakets durch mehrere Verfolgungsstationen zu registrieren. Wenn sich der Transponder im Empfangsbereich zweier Verfolgungsstation befindet, kann es dazu kommen, dass beide Verfolgungsstationen dasselbe Verfolgungspaket gegebenenfalls zu geringfügig unterschiedlichen Empfangszeiten empfangen. Wenn dann beide Verfolgungsstationen die Identitätsinformation des Verfolgungspakets an eine Zentralstation zur weiteren Auswertung weiterleiten, kann es zu Kollisionen und zu einer falschen Zuordnung kommen. Um dies zu vermeiden, kann die Zählerinformation verwendet werden. Die Zählerinformation kann dabei sowohl ein Zeitstempel als auch eine einfache fortlaufende Nummer sein. Die Verfolgungsstationen leiten die Zählerinformation neben der Identitätsinformation und der Positionsinformation in einem Detektionspaket an die Zentralstation weiter. Durch die Verwendung einer Zählerinformation wird die Standortverfolgung bzw. die Genauigkeit der Standortverfolgung weiter verbessert. Fehlzuordnungen werden vermieden.

In einer weiteren Ausgestaltung ist die Sendeeinheit als Transceiver, insbesondere als Funktransceiver, zum Empfangen einer Empfangsbestätigung nach dem Aussenden des Verfolgungspaketes und nach dem Übermitteln des Passierzeitpunktes ausgebildet. Durch die bidirektionale Kommunikation eines Funktransceivers können Empfangsbestätigungen empfangen werden. Durch eine Empfangsbestätigung kann sichergestellt werden, dass eine übermittelte Nachricht empfangen wurde. Auf Basis dieser Information, kann eine weitere Informationsverarbeitung erfolgen. Beispielsweise kann von einer erneuten Übermittlung derselben Information abgesehen werden. Bei einer drahtlosen Datenübertragung kommt es oft zu Paketverlusten. Diesen Paketverlusten wird durch eine mehrfache Übertragung derselben Information vorgebeugt. Durch die Verwendung von Empfangsbestätigungen kann auf diese redundanten Übertragungen verzichtet werden, was zu einem reduzierten Kommunikations- und damit Energiebedarf führt. Ebenfalls kann die Nachricht zur späteren Übermittlung in einem Speicher gespeichert werden, wenn keine Empfangsbestätigung empfangen wird. Hierdurch kann sichergestellt werden, dass keine Daten verloren gehen. Dies ist insbesondere bei einem hohen Nachrichtenaufkommen relevant, wie es sich beispielsweise in einem Start- und/oder Zielbereich einer Massensportveranstaltung ergeben kann.

In einer weiteren Ausgestaltung ist der Prozessor dazu ausgebildet den Verfolgungsmodus zu deaktivieren, wenn für eine zweite vordefinierte Zeitperiode nach dem Aussenden des Verfolgungspaketes keine Empfangsbestätigung empfangen wird. Als zusätzliche Möglichkeit zur weiteren Energieeinsparung kann auch auf den Empfang bzw. den Nicht-Empfang von Empfangsbestätigungen aufgebaut werden. Sofern sich der Transponder in einem Gebiet ohne Verfolgungsstationen befindet und demnach keine Empfangsbestätigungen auf ausgesendete Verfolgungspakete erhält, kann der Verfolgungsmodus und das periodische Aussenden von Verfolgungspaketen nach einer gewissen Zeitspanne deaktiviert werden. Hierdurch kann eine weitere Energieeinsparung erreicht werden.

In einer Ausgestaltung des erfindungsgemäßen Systems umfasst die mindestens eine Messstelle eine erste Messstelle zum Übertragen einer Nachricht mit einer Zeitmessinformation an den Transponder beim Passieren der ersten Messstelle und eine zweite Messstelle zum Übertragen einer Nachricht mit einer Aktivierungsinformation an den Transponder beim Passieren der zweiten Messstelle. Es ist möglich, dass an zwei verschiedenen Messstellen jeweils eine Nachricht übermittelt wird, wobei die erste Nachricht an der ersten Messstelle eine Zeitmessinformation enthält und wobei die zweite Nachricht an der zweiten Messstelle eine Aktivierungsinformation enthält. Durch die Verwendung separater Messstellen zur Zeitmessung und zur Aktivierung des Verfolgungsmodus kann die Installation bzw. der Aufbau eines Zeitmesssystems vereinfacht und beschleunigt werden. Hierbei wird oft ungeschultes Personal eingesetzt. Beispielsweise kann durch eine verschiedenfarbige Kennzeichnung ein vereinfachter Aufbau mit klarer Funktionszuordnung erreicht werden.

In einer weiteren Ausgestaltung des Systems umfasst die mindestens eine Messstelle zumindest eine der folgenden Einheiten: eine Induktionsschleife zum drahtlosen Übertragen von Nachrichten über ein induktives Feld; und eine Funkschnittstelle zum drahtlosen Empfangen des Passierzeitpunktes und/oder einer Statusinformation zur Angabe eines Status des Verfolgungsmodus des Transponders. Die Kommunikation von der Messstelle zum Transponder erfolgt mittels der Induktionsschleife. Hierdurch kann erreicht werden, dass die Kommunikation räumlich begrenzt ist. Im Vergleich zu einer Funkkommunikation kann eine Induktionsschleife zum Erzeugen eines induktiven Feldes so ausgerichtet sein, dass das induktive Feld nur in einem definierten bzw. vergleichsweise genau abgrenzbaren Bereich erzeugt wird. Nur in diesem Bereich kann der Transponder bzw. die Empfangseinheit des Transponders die Nachricht empfangen, sodass die Zeitmessung und die Aktivierung des Verfolgungsmodus an einer möglichst genau definierten Stelle stattfinden. Demnach ergibt sich bei der Zeitmessung eine erhöhte Genauigkeit und/oder wird der Verfolgungsmodus nur dann aktiviert, wenn tatsächlich die Messstelle passiert wird, sodass eine fehlerhafte zufällige Aktivierung vermieden wird. Durch die Funkschnittstelle zum Empfangen des Passierzeitpunktes wird sichergestellt, dass der Passierzeitpunkt auch dann vom Transponder zur Messstelle übertragen werden kann, wenn sich der Transponder nicht mehr im unmittelbaren Bereich des induktiven Feldes befindet. Hierdurch wird eine höhere Sicherheit der Datenübertragung gewährleistet. Zudem kann über die Funkschnittstelle auch eine Statusinformation empfangen werden. Durch die Statusinformation wird das Aktivieren bzw. Deaktivieren bzw. der aktuelle Aktivierungsstatus des Verfolgungsmodus angezeigt. Dies kann zur Kontrolle verwendet werden, bei wie vielen Transpondern die Standortverfolgung erfolgreich aktiviert bzw. deaktiviert wurde, was beispielsweise bei der Standortverfolgung von Einsatzkräften interessant ist. Es versteht sich, dass der Transponder bzw. die Sendeeinheit des Transponders dann entsprechend zur Übermittlung der Statusinformation ausgebildet ist. Die Statusinformation wird üblicherweise durch den Prozessor ermittelt und kann in einem separaten Datenpaket oder in einem Datenpaket zusammen mit dem Passierzeitpunkt übermittelt werden.

In einer Ausgestaltung ist die Zentralstation zum Auswerten mehrerer Detektionspakete und zum Interpolieren der Positionsinformationen in den mehreren Detektionspaketen ausgebildet. Die Zentralstation kann beispielsweise die Position eines mobilen Transponders als Mittelwert, beispielsweise auf Basis einer zeitlichen Gewichtung, zwischen Positionen in aufeinanderfolgenden Detektionspaketen ermitteln. Im Detektionspaket werden zunächst Informationen eines an einer Verfolgungsstation empfangenen Verfolgungspakets, also die Identitätsinformation eines Transponders, sowie die Position der empfangenden Verfolgungsstation an die Zentralstation übermittelt. In einer Ausgestaltung enthält das Detektionspaket zudem eine Signalstärkeinformation des Verfolgungspakets. Wenn ein Verfolgungspaket an mehreren Verfolgungsstationen empfangen wird, übermitteln zunächst alle beteiligten Verfolgungsstationen das Detektionspaket an die Zentralstation. Um an der Zentralstation dann eine Zuordnung zu derjenigen Verfolgungsstation vornehmen zu können, die am nächsten am Standort des Transponders beim Senden des Detektionspaketes war, kann die Signalstärkeinformation des Verfolgungspakets verwendet werden. Die Standortverfolgung wird verbessert.

In einer weiteren Ausgestaltung ist die Verfolgungsstation als stationäre Verfolgungsstation ausgebildet. Diese stationäre Verfolgungsstation kann beispielsweise vor einer Sportveranstaltung entlang der Strecke platziert werden. Während der Sportveranstaltungen wird dann die Position der Verfolgungsstation nicht mehr verändert. Hierdurch kann die Verarbeitung der Daten in der Zentralstation vereinfacht werden. Ebenfalls ist es möglich, dass die Menge der übertragenen Daten reduziert wird, beispielsweise durch eine Übermittlung einer reduzierten Positionsinformation, die sich auf eine binäre Information beschränkt, solange sich die Position der Verfolgungsstation nicht ändert.

In einer vorteilhaften Ausgestaltung umfasst die Verfolgungsstation zumindest eine der folgenden Einheiten: eine Positionseinheit, insbesondere ein GPS, Galileo oder GLONASS Empfänger, zum Ermitteln einer Position der Verfolgungsstation; eine Mobilfunkeinheit zum Weiterleiten des Detektionspakets an die Zentralstation; eine Transceivereinheit zur bidirektionalen Kommunikation mit dem Transponder; eine Zeitbasis zum Ermitteln einer Empfangszeit des empfangenen Verfolgungspakets; und einen Pufferspeicher zum Speichern des empfangenen Verfolgungspakets. Die Positionseinheit kann insbesondere eine Satelliten-Positionseinheit umfassen. Durch die Auswertung von Satellitensignalen kann eine genaue Lokalisierung ohne die Verwendung weiterer Infrastruktur und ohne manuelle Intervention erreicht werden. Das Weiterleiten des Detektionspakets kann mittels einer Mobilfunkeinheit beispielsweise über das GSM-Netz erfolgen. Eine Transceivereinheit bezeichnet insbesondere eine Funkeinheit. Die Zeitbasis entspricht insbesondere einer Uhr, die beispielsweise mit dem Satellitenempfänger synchronisiert werden kann (z.B. GPS-Zeit). Hierdurch wird eine hochgenaue Zeitermittlung erreicht. Durch einen Pufferspeicher zum Speichern der empfangenen Verfolgungspakete kann erreicht werden, dass der Aufwand für die Weiterleitung der empfangenen Pakete reduziert werden kann, da mehrere empfangene Verfolgungspakete, bzw. die darin enthaltenen Identitätsinformationen, gemeinsam in einem Detektionspaket übermittelt werden können. Hierdurch wird der Kommunikationsoverhead reduziert.

Bevorzugt werden der Transponder und das System der vorliegenden Erfindung für die Zeitmessung und Standortverfolgung von Teilnehmern bei einer Sportveranstaltung eingesetzt. In diesem Umfeld sind keine vergleichbaren Systeme bekannt und können die Vorteile der vorliegenden Erfindung bezüglich der Energieeinsparung und der einfachen Anwendung voll zur Geltung kommen. Es versteht sich jedoch, dass die vorliegende Erfindung nicht auf dieses Anwendungsfeld beschränkt zu verstehen ist und auch in weiteren Feldern eingesetzt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung eines Systems gemäß einem Aspekt der vorliegenden Erfindung;
- Fig. 2: eine Darstellung eines Transponders gemäß einem Aspekt der vorliegenden Erfindung in perspektivischer und schematischer Ansicht;
- Fig. 3: eine schematische Darstellung einer Messstelle in einem System gemäß der vorliegenden Erfindung;
- Fig. 4: eine schematische Darstellung einer Verfolgungsstation in einem System gemäß der vorliegenden Erfindung;
- Fig. 5: eine Darstellung eines Systems gemäß einem Aspekt der vorliegenden Erfindung mit einer mobilen Verfolgungsstation;
- Fig. 6: eine schematische Darstellung eines erfindungsgemäßen Systems mit einer ersten Messstelle zur Übermittlung einer Aktivierungsinformation und einer zweiten Messstelle zur Übermittlung einer Zeitmessinformation;
- Fig. 7: eine schematische Darstellung einer Nachricht, die von einem erfindungsgemäßen mobilen Transponder beim Passieren einer Messstelle empfangen wird;
- Fig. 8: eine schematische Darstellung eines Verfolgungspakets, das von einem erfindungsgemäßen mobilen Transponder im Verfolgungsmodus periodisch ausgesendet wird;
- Fig. 9: eine schematische Darstellung eines Detektionspakets, das periodisch von einer Verfolgungsstation an eine Zentralstation übermittelt wird; und
- Fig. 10: eine schematische Darstellung eines Verfahrens gemäß einem Aspekt der vorliegenden Erfindung.

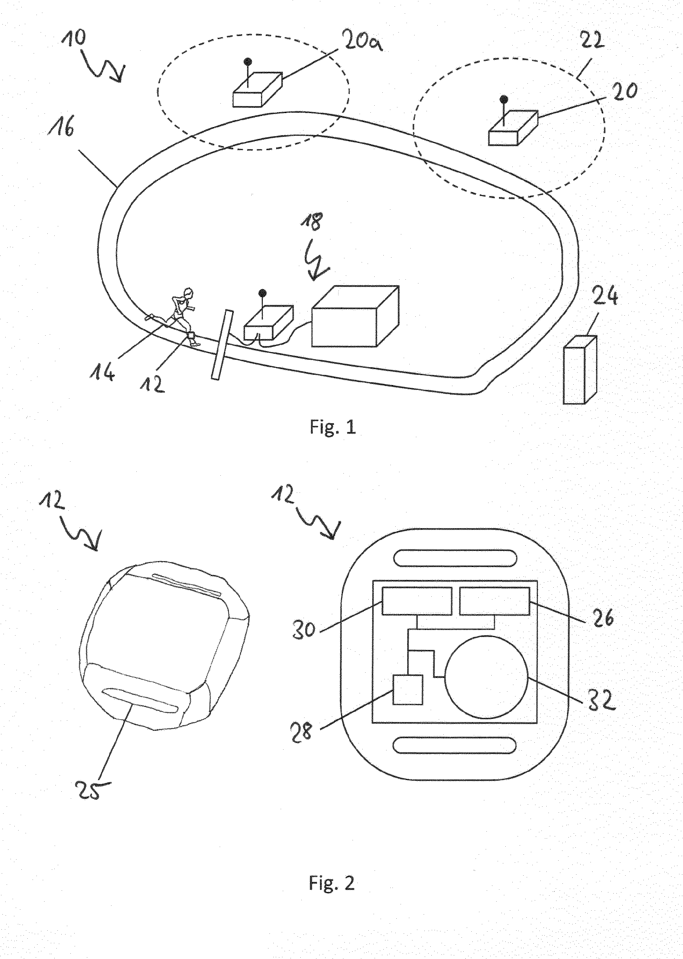

Fig. 1 zeigt eine schematische Darstellung eines Systems 10 zur Zeitmessung und Standortverfolgung gemäß einem Aspekt der vorliegenden Erfindung. Das System 10 umfasst einen mobilen Transponder 12. Der Transponder 12 wird im dargestellten Beispiel von einem Laufsportler 14 getragen. Der Laufsportler 14 bewegt sich entlang einer vorbestimmten Strecke 16. Erfindungsgemäß soll einerseits eine Zeitmessung zur Erfassung einer Start-, Ziel und/oder Zwischenzeit und andererseits eine Standortverfolgung des Laufsportlers 14 ermöglicht werden.

Hierzu umfasst das System 10 eine Messstelle 18. Beim Passieren der Messstelle 18 wird von der Messstelle 18 mindestens eine Nachricht an den mobilen Transponder 12 übertragen. Auf Basis der übertragenen Nachricht kann eine Zeitmessung stattfinden. Diese Zeitmessung basiert auf der Ermittlung eines Passierzeitpunkts des Transponders, also des Zeitpunkts, zu dem sich der Transponder 12 an der Messstelle 18 bzw. in ihrer unmittelbaren Nähe befindet.

Des Weiteren kann der Transponder 12 beim Passieren der Messstelle 18 in einen Verfolgungsmodus (teilweise hierin auch als Tracking-Modus bezeichnet) versetzt werden. In diesem Verfolgungsmodus sendet der Transponder in regelmäßigen Zeitabständen Verfolgungspakete (auch als Tracking Pings bezeichnet) aus. Diese Verfolgungspakete werden von einer Verfolgungsstation 20 empfangen, wenn sich der Transponder 12 in einem Kommunikationsradius 22 der Verfolgungsstation 20 befindet (bzw. sich die Verfolgungsstation in einem Kommunikationsradius des Transponders befindet). Die Verfolgungsstation 20 befindet sich dazu entlang der Strecke 16, wobei der Kommunikationsradius 22 der Verfolgungsstation 20 einen Teil der Strecke 16 abdeckt. Wie dargestellt, umfasst das System 10 üblicherweise zumindest eine weitere Verfolgungsstation 20a, die ebenfalls entlang der Strecke 16 platziert und zum Empfang der Verfolgungspakete des Transponders 12 ausgebildet ist. Die Verfolgungsstation 20 verfügt über eine bekannte Position.

Wenn sich der Transponder 12 entlang der Strecke 16 im Kommunikationsradius 22 der Verfolgungsstation 20 befindet (bzw., wenn sich die Verfolgungsstation in einem Kommunikationsradius des Transponders befindet), empfängt die Verfolgungsstation 20 das vom Transponder 12 periodisch ausgesendete Verfolgungspaket. Wenn die Verfolgungsstation 20 ein Verfolgungspaket empfängt, leitet sie dieses bzw. die darin enthaltene Identitätsinformation des Transponders zusammen mit ihrer eigenen Position als Detektionspaket beispielsweise per Mobilfunk an eine Zentralstation 24 weiter.

Die Zentralstation 24 empfängt das Detektionspaket und ermittelt auf dessen Basis eine Position des Transponders 12 zu einer bestimmten Zeit. In der Zentralstation 24 wird also auf Basis empfangener Daten zumindest einer Verfolgungsstation ein Bild des derzeitigen Standes des Rennens ermittelt. Im einfachsten Fall kann hierzu angenommen werden, dass sich der Transponder 12 zum Zeitpunkt des Empfangs des Verfolgungspakets durch die Verfolgungsstation 20 an der Position der Verfolgungsstation 20 befand. Die Standortverfolgung erfolgt sozusagen basierend auf der Annahme, dass sich der Transponder an der Position der Verfolgungsstation befindet, wenn die Verfolgungsstation ein Verfolgungspaket empfangen kann. Die Ermittlung der Position zu einem bestimmten Zeitpunkt stellt die Basis für eine Standortverfolgung dar. Wenn die Zentralstation 24 mehrere Detektionspakete des Transponders 12 erhält, beispielsweise ein erstes Detektionspaket der Verfolgungsstation 20 und ein zweites Detektionspaket der Verfolgungsstation 20a, kann die Standort des Transponders 12 beispielsweise durch Interpolieren zwischen den beiden Positionen ermittelt werden. Im Regelfall wird eine Vielzahl von Verfolgungsstationen entlang der Strecke 16 angeordnet. Der Läufer passiert mit seinem Transponder 12 eine Verfolgungsstation nach der anderen. Dann können Annahmen über die Geschwindigkeit des Läufers getroffen werden, sodass eine Schätzung der Position in Echtzeit ermöglicht wird. Hierzu können Standardalgorithmen der Lokalisierung und der Standortverfolgung verwendet werden.

Die eigentliche Lokalisierung des Transponders 12 erfolgt auf Basis der beschränkten Reichweite des Funksignals, das zwischen der Verfolgungsstation und dem Transponder ausgetauscht wird. Diese Reichweite liegt beispielsweise in einem Bereich < 50 m. Hieraus sowie aus der Anzahl der Verfolgungsstationen ergibt sich eine Genauigkeit bzw. eine Standortauflösung der Standortverfolgung, die zwar üblicherweise unter der Genauigkeit bzw. der Standortauflösung eines GPS-Trackers liegt, jedoch für den Anwendungsfall der Sportveranstaltungen ausreichend ist. Hierzu wird angemerkt, dass auch die Genauigkeit von herkömmlichen GPS-Trackern nicht erheblich besser ist, da diese Tracker häufig zum Energiesparen nur ein Mal pro Minute aktiviert werden, wodurch die Positionsauflösung auf ein vergleichbares Niveau absinkt.

Die Zentralstation 24 kann beispielsweise als Server in einem Netzwerk oder im Internet ausgeführt sein. Die Zentralstation kann auch als Informationssammelstelle in einer Messstelle integriert sein. Beispielsweise kann die Zentralstation in die Auswerteeinheit einer Messstelle integriert sein. Die Zentralstation verfügt über Kommunikationsmittel zur Kommunikation mit den Messstellen und Verfolgungsstationen, beispielsweise über eine Mobilfunkanbindung. In der Zentralstation werden zusätzlich zu den Detektionspaketen mehrerer Verfolgungsstationen üblicherweise auch Zeitmessinformationen verarbeitet, die von mehreren Messstellen auf Basis der Passierzeitpunkte der passierenden Transponder erzeugt und an die Zentralstation kommuniziert werden. Veranstalter, Zuschauer und Sportler können auf die in der Zentralstation ermittelten Daten zugreifen. Beispielsweise ist eine Visualisierung auf einer Großanzeige möglich.

Die vorliegende Erfindung betrifft insbesondere den Bereich der Zeitmessung und der Standortverfolgung für Sportveranstaltungen, beispielsweise Triathlon, IronMan, Long-Distance Radrennen (z.B. race across america), Rad-Quer, Biathlon, Langlauf oder andere. Auch eine Anwendung in weiteren Feldern wie beispielsweise Inline-Skating, BMX, Mountainbike, Eisschnelllauf, Motocross, Laufen, Motorsport, Radsport ist denkbar. In Fig. 1 ist als Beispiel eine Anwendung im Bereich des Laufsports gezeigt. Dargestellt ist ein beispielhafter Rundkurs. Es versteht sich, dass die vorliegende Erfindung gleichermaßen auch für Strecken eingesetzt werden kann, bei denen Start und Ziel nicht an derselben Stelle liegen. Im dargestellten Beispiel gibt es nur eine Messstelle. Üblicherweise sind mehrere Messstellen vorgesehen. Beispielsweise gibt es für die Zeitmessung getrennte Messstellen für den Start und das Ziel. Zudem sind regelmäßig weitere Messstellen als Zwischenzeit-Messstellen vorgesehen. Weiterhin kann eine Vielzahl weiterer Verfolgungsstationen vorhanden sein. Wenn die Strecke bekannt ist, kann dies für die Standortverfolgung verwendet werden, sodass die Genauigkeit erhöht werden kann. Es versteht sich aber, dass eine bekannte Strecke keine Voraussetzung für die Standortverfolgung ist.

Fig. 2 zeigt eine schematische Darstellung eines Transponders 12 gemäß einem Aspekt der vorliegenden Erfindung. Auf der linken Seite der Fig. 2 ist eine perspektivische Vorderansicht dargestellt. Auf der rechten Seite der Fig. 2 sind die verschiedenen Bauteile in einer vergrößerten schematischen Schnittansicht dargestellt. Der Transponder 12 wird üblicherweise vom Sportler getragen (beispielsweise bei Laufsportveranstaltungen etc.) oder am Sportgerät befestigt (beispielsweise beim Go-Kart Rennen etc.). Im dargestellten Beispiel sind hierzu Ösen 25 zum Aufnehmen eines elastischen Bandes zur Anbringung an einem Arm oder einem Bein des Sportlers vorgesehen. Ebenfalls denkbar ist eine Befestigung mittels Klebestreifen, Magneten, Schrauben etc.

Der Transponder 12 umfasst eine Empfangseinheit 26 zum Empfangen mindestens einer Nachricht von einer Messstelle beim Passieren der Messstelle. Die Empfangseinheit 26 ist bevorzugt zum Empfangen eines modulierten induktiven Feldes ausgebildet und umfasst dazu mindestens eine Antenne (Spule). Insbesondere können drei orthogonal zueinander ausgerichtete Antennen (Spulen) vorgesehen sein, durch die ein Signal empfangen werden kann. Durch drei orthogonale Antennen wird der Einfluss der Lage des Transponders relativ zum induktiven Feld kompensiert bzw. vermindert. Die Empfangseinheit 26 ist bevorzugt als Aufwach-Empfänger (Wakeup-Receiver) ausgebildet und kann den Transponder bzw. den Prozessor mittels eines induktiven Signals aus einem batterieschonenden Zustand (Laufzeit einige Jahre) in einen aktiven Modus versetzen. Insbesondere mittels dieses Prinzips kann der Verfolgungsmodus aktiviert werden. Weiterhin ist es möglich, den Transponder mittels des induktiven Signals zu konfigurieren. Beispielsweise können Parameter des Verfolgungsmodus, wie zum Beispiel eine Zeitperiode des periodischen Aussendens der Verfolgungspakete, konfiguriert werden. Ebenfalls ist es möglich, dass der Verfolgungsmodus für bestimmte Veranstaltungen und/oder für bestimmte Transponder komplett deaktiviert wird, um die Batterie zu schonen. Es könnten also im Zuge der Aktivierung des Verfolgungsmodus noch weitere "Kommandos" an den Transponder übertragen werden. Hierdurch könnten beispielsweise ein schneller Verfolgungsmodus mit einer hohen Frequenz der ausgesendeten Verfolgungspakete und ein langsamer Verfolgungsmodus mit einer geringeren Sendefrequenz realisiert werden, um einerseits hohen Geschwindigkeiten Rechnung zu tragen und andererseits eine möglichst lange Batterielaufzeit zu erlauben. Demnach könnte sozusagen der durch die Aktivierungsinformation realisierte Ein-/Aus-Schalter durch einen Schnell-/Langsam-/Aus-Schalter ersetzt werden. Weitere ähnliche Konfigurationen sind möglich.

Der Transponder 12 umfasst zudem einen Prozessor 28 zum Auswerten der von der Empfangseinheit 26 empfangenen Nachrichten. Insbesondere kann ein Standard-Niedrigenergie-Mikrocontroller als Prozessor verwendet werden. Der Prozessor 28 ist dazu ausgebildet festzustellen, ob die Nachricht eine Zeitmessinformation und/oder eine Aktivierungsinformation enthält. Sofern eine Zeitmessinformation enthalten ist, wird ein Passierzeitpunkt der Messstelle berechnet. Hierzu kann der Prozessor 28 beispielsweise die Signalstärke der empfangenen Nachricht auswerten. Sofern die Nachricht eine Aktivierungsinformation enthält, aktiviert der Prozessor 28 einen Verfolgungsmodus des mobilen Transponders 12.

Der Transponder 12 umfasst weiterhin eine Sendeeinheit 30 zum periodischen Aussenden eines Verfolgungspakets, wenn der Verfolgungsmodus aktiviert ist. Das Verfolgungspaket umfasst zumindest eine Identitätsinformation des mobilen Transponders 12. Zudem ist die Sendeeinheit zum Übermitteln des im Prozessor 28 berechneten Passierzeitpunkts ausgebildet. Die Sendeeinheit 30 ist bevorzugt als Funktransceiver zur bidirektionalen Kommunikation in einem ISM-Frequenzband (Industrial, Scientific, Medical), beispielsweise im 2,4 GHz Band, ausgebildet. Vorteilhafterweise ist die Sendeeinheit 30 zum Empfangen von Empfangsbestätigungen ausgebildet. Insbesondere können Empfangsbestätigungen von der Messstelle und/oder von der Verfolgungsstation empfangen werden. Sende- und Empfangseinheit können sich eine Antenne teilen oder über separate Antennen verfügen. Ebenfalls ist eine Ausführung als kombinierte Sende- und Empfangseinheit denkbar. Der Begriff des periodischen Aussendens umfasst hierin sowohl das Aussenden in gleichbleibenden Abständen (beispielsweise in Abständen von einer Sekunde) als auch das Aussenden in ungleichmäßigen Abständen, beispielsweise in stochastisch verteilten Abständen.

Der Transponder 12 verfügt weiterhin über eine Batterie 32, die bevorzugt als Knopfzelle ausgebildet ist. Das Gewicht der Batterie 32 hat üblicherweise einen relativ großen Anteil am Gesamtgewicht des Transponders. Demnach ist es für eine Gewichtsreduktion des Transponders relevant, eine möglichst leichte bzw. kleine Batterie zu verwenden, sodass ein möglichst geringer Energieverbrauch aller Komponenten des Transponders 12 vorteilhaft ist. Die Batterie 32 ist bevorzugt nicht-wiederaufladbar ausgeführt. Hierdurch wird vermieden, dass am Gehäuse des Transponders 12 Kontakte oder Stecker vorzusehen sind, die möglicherweise die Wasserdichtigkeit und/oder die Robustheit gegenüber Umwelteinflüssen beeinflussen könnten. Zudem werden die mechanische Robustheit erhöht und die Herstellungskosten minimiert.

Die Sendeeinheit 30 hat einen vergleichsweise hohen Energiebedarf beim Senden und Empfangen von Nachrichten. Durch das gezielte Aktivieren des Verfolgungsmodus beim Passieren einer Messstelle, an der eine Nachricht mit einer Aktivierungsinformation empfangen wird, kann daher erreicht werden, dass der Verfolgungsmodus genau dann aktiv ist, wenn er benötigt und gewünscht ist. Hierdurch wird die Batterie des mobilen Transponders geschont. Vorteilhafterweise ist zusätzlich eine Möglichkeit zur automatischen Deaktivierung des Verfolgungsmodus durch den Prozessor vorgesehen. Beispielsweise ist es möglich, den Verfolgungsmodus am Start eines Rennens einzuschalten und beim Überschreiten der Ziellinie wieder zu deaktivieren.

Zur Deaktivierung der Sendeeinheit 30 kann einerseits die zur Verfügung stehende Energie bzw. die von der Batterie 32 bereitgestellte Spannung vom Prozessor 28 überwacht werden. Sobald die Batterie zu Neige geht, also die Batteriespannung unter einen vordefinierten Schwellwert fällt, kann der Verfolgungsmodus zum Energiesparen deaktiviert werden. Dies ist insbesondere bei Anwendungen relevant, bei denen die Zeitmessung gegenüber der Standortverfolgung priorisiert werden soll. Bei einer Sportveranstaltung ist üblicherweise die Zeitmessung der Teilnehmer wichtiger als die Standortverfolgung, die oft nur eine Zusatzinformation darstellt. Durch die automatische Deaktivierung des Verfolgungsmodus basierend auf dem vorhandenen Energievorrat wird erreicht, dass eine Zeitmessung möglich bleibt. Andererseits ist es alternativ oder zusätzlich möglich, dass der Verfolgungsmodus nach einer vorbestimmten Zeitspanne ohne Empfang einer Aktivierungsinformation durch den Prozessor automatisch deaktiviert wird. Hierdurch kann eine Art Auszeit-Funktion (Timeout-Funktion) erreicht werden. Beispielsweise kann der Verfolgungsmodus nach einigen Stunden, beispielsweise drei Stunden, ohne Empfang eine Aktivierungsinformation automatisch deaktiviert werden, um eine automatische Deaktivierung nach Beendigung der Sportveranstaltung sicherzustellen. Zuletzt ist es möglich, dass eine maximale Zeitspanne seit einer letzten erfolgreichen Übertragung eines Verfolgungspakets an eine Verfolgungsstation definiert wird. Üblicherweise wird, abhängig von der Anzahl bzw. der Dichte der Verfolgungsstationen entlang der Strecke, in den meisten Fällen auf ein ausgesendetes Verfolgungspaket im Transponder keine Empfangsbestätigung erhalten, da sich keine Verfolgungsstation in Kommunikationsreichweite befindet. Sofern auf das Aussenden eines Verfolgungspakets von einer Verfolgungsstation eine Empfangsbestätigung erhalten wird, wird diese Information vorzugsweise dazu genutzt, eine Zeitspanne für die Deaktivierung des Verfolgungsmodus zurückzusetzen (bzw. einen Zähler erneut zu starten). Wenn also für eine vorbestimmte Zeit keine Empfangsbestätigung von einer Verfolgungsstation empfangen wird, wird der Verfolgungsmodus automatisch durch den Prozessor deaktiviert. Ebenfalls ist es möglich, dass die Deaktivierung automatisch nach einer vorbestimmten maximalen Zeitdauer im Verfolgungsmodus erfolgt.

Durch die Verwendung einer Kombination mehrerer Ansätze zur Deaktivierung des Verfolgungsmodus kann sichergestellt werden, dass der Verfolgungsmodus nach der Verwendung des Transponders sicher deaktiviert ist, um die Batterie zu schonen. Eine Deaktivierung erfolgt auch dann, wenn die Messstelle im Ziel nicht passiert wurde. Eine Kombination der o.g. Ansätze zur Deaktivierung ermöglicht es zudem Bedienfehler durch Veranstalter oder Teilnehmer der Sportveranstaltung zu kompensieren. So kommt es in der Praxis oft vor, dass die Transponder zur Lagerung im selben Raum wie die demontierten Messstellen gelagert werden. Sofern dann vergessen wird eine der Verfolgungsstation zu deaktivieren, sodass auf jedes Verfolgungspaket der nicht-verwendeten Transponder eine Empfangsbestätigung empfangen wird, wird trotzdem eine Deaktivierung des Verfolgungsmodus durch die Auszeit-Funktion sichergestellt.

Es versteht sich, dass der Transponder 12 weitere Einheiten wie zum Beispiel eine interne Zeitbasis, einen Speicher zum Speichern mehrerer Passierzeitpunkte oder eine Energiespareinheit umfassen kann. Es ist möglich, dass einige der vorgenannten Einheiten des Transponders in unterschiedlicher Form kombiniert ausgeführt sind oder die Funktionen einer Einheit teilweise oder vollständig durch andere Einheiten übernommen werden.

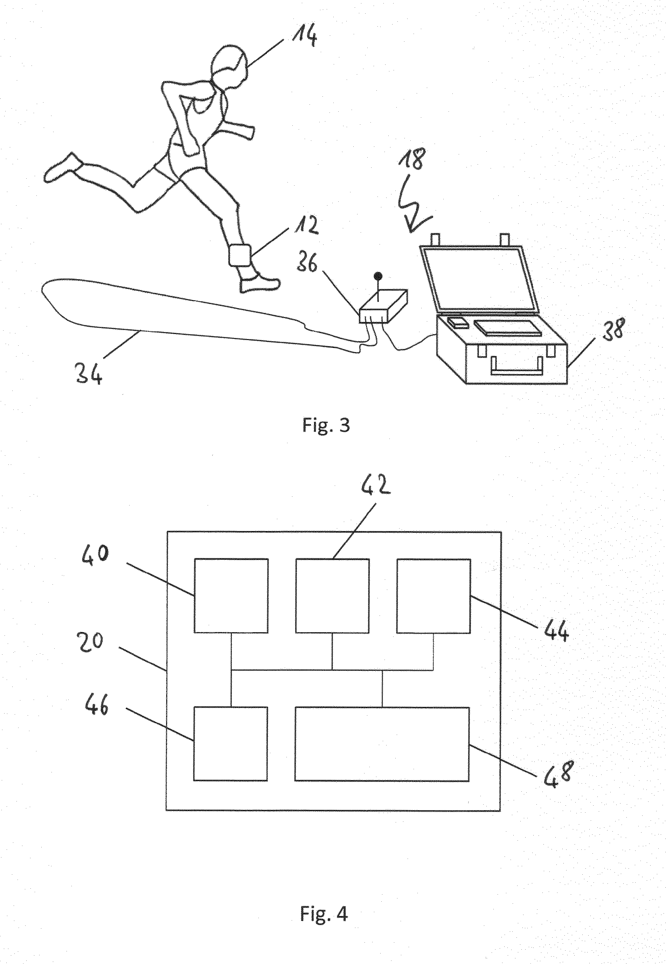

In Fig. 3 ist die Situation an einer Messstelle bei einer Laufsportveranstaltung schematisch illustriert. Ein Sportler 14 trägt einen erfindungsgemäßen Transponder 12 bei sich. Der Transponder kann 12 beispielsweise mittels eines elastischen Bandes am Knöchel des Läufers 14 befestigt sein. Der Sportler 14 bewegt sich in der Nähe einer Messstelle 18. Im dargestellten Beispiel umfasst die Messstelle eine Antenne 34 und eine Ausleseeinheit 36 zur Kommunikation der Daten. Die dargestellte beispielhafte Messstelle 18 umfasst weiterhin eine Auswerteeinheit 38 zur Weiterverarbeitung der gemessenen Zeiten. Die Auswerteeinheit 38 ist mit der Ausleseeinheit 36 verbunden ist. In anderen Ausführungsformen können Ausleseeinheit 36 und Auswerteeinheit 38 auch als kombinierte Einheit ausgeführt sein.

Die Antenne 34 ist am Boden angeordnet und kann beispielsweise in einem Kabelkanal, der orthogonal zur Laufstrecke verläuft, verlegt sein. Die dargestellte Antenne 34 entspricht einer einfachen Drahtschleife zum Erzeugen eines induktiven Feldes. Diese Drahtschleife kann über die Strecke gelegt werden. Auch andere Anordnungen der Antenne 34, beispielsweise seitlich der Laufstrecke oder in einer Brücke über der Laufstrecke sind denkbar. Über der Antenne 34 wird ein induktives Feld erzeugt. Die Antenne entspricht also einer Induktionsschleife. Das Feld ist zumeist nach oben in Richtung des passierenden Läufers 14 orientiert. Dabei ist es möglich, dass der Transponder die Drahtschleife in Höhen von bis zu mehreren Metern über der Drahtschleife passiert und eine Nachricht empfangen kann. In einer bevorzugten Ausführungsform wird ein moduliertes induktives Feld bei 125 kHz erzeugt. Der Transponder 12 bzw. die Empfangseinheit 26 im Transponder 12 ist dazu ausgebildet, dieses Feld zu registrieren.

Je nachdem, wie lange sich der Transponder 12 im Feld befindet, gibt es zumeist mehrere sogenannte Detektionen, die Nachrichten entsprechen, die der Transponder 12 empfängt. Basierend hierauf kann ein Passierzeitpunkt der Messstelle 18 berechnet werden. Der Passierzeitpunkt entspricht dabei dem Zeitpunkt, an dem sich der Läufer 14 direkt über der Antenne 34 befindet. Durch einen Algorithmus kann dieser Passierzeitpunkt im Prozessor des Transponders 10 präzise ermittelt werden. Die Berechnung kann beispielsweise basierend auf Signalstärken bzw. Feldstärken des induktiven Feldes, die an einer oder mehreren verschiedendirektionalen Antennen im Transponder anliegen, und/oder auf Basis weiterer Parameter erfolgen. Basierend auf der Signalstärke wird sozusagen eine minimale Distanz zwischen Transponder und Messstelle ermittelt. Zum Beispiel kann, wenn mehrere Nachrichten empfangen werden, eine Zählernummer oder ein Empfangszeitpunkt derjenigen Nachricht, die mit der höchsten Signalstärke empfangen wurde, als Passierzeitpunkt festgelegt werden. Der Passierzeitpunkt entspricht demnach dem Moment, in dem sich der Transponder 12 über die Messstelle 18 bewegt. Der Passierzeitpunkt bezieht sich demnach auf eine Zeitbasis des Transponders. Der Passierzeitpunkt wird mittels der Sendeeinheit des Transponders 12 an die Messstelle 18 übermittelt.

In Fig. 4 ist eine Verfolgungsstation 20 schematisch illustriert. Die Verfolgungsstation umfasst eine Positionseinheit 40. Die Positionseinheit 40 dient zum Ermitteln der Position der Verfolgungsstation 20. Insbesondere kann ein GPS-Empfänger vorgesehen sein. Weiterhin umfasst die Verfolgungsstation 20 eine Mobilfunkeinheit 42 zur Kommunikation der Detektionspakete an die Zentralstation. Den empfangenen Verfolgungspaketen werden hier Positionsinformationen der Verfolgungsstation, also die aktuelle Position der Verfolgungsstation, hinzugefügt. Die Mobilfunkeinheit 42 kann insbesondere als GSM-Modul zur Mobilkommunikation ausgebildet sein. Alternativ kann die Verbindung auch drahtlos per WLAN oder drahtgebunden per LAN/Powerline/DSL etc. erfolgen.

Weiterhin umfasst die Verfolgungsstation 20 eine Transceivereinheit 44 für die Kommunikation mit dem Transponder. Die Transceivereinheit 44 kann insbesondere als 2,4 GHz Funkmodul zur bidirektionalen Funkkommunikation ausgebildet sein. Die Verfolgungsstation 20 verfügt normalerweise über eine interne Zeitbasis 46. Die Zeitbasis 46 dient zur Feststellung einer Empfangszeit (Zeitstempel) eines empfangenen Verfolgungspakets. Vorteilhafterweise wird die Zeitbasis 46 regelmäßig mit einer Satellitenzeit (GPS-Zeit) synchronisiert, um hierdurch eine hohe Genauigkeit sicherzustellen. Des Weiteren umfasst die Verfolgungsstation 20 üblicherweise einen Pufferspeicher 48, der beispielsweise als Flash Speicher zum Speichern empfangener Verfolgungspakete ausgeführt sein kann. Hierdurch kann zum einen eine effizientere Kommunikation durch Zusammenfassung mehrerer Verfolgungspakete in einem Detektionspaket erreicht werden. Zum anderen kann eine höhere Sicherheit bei der Übertragung gewährleistet werden. Im Pufferspeicher 48 werden zu den empfangenen Verfolgungspaketen jeweils die entsprechenden Empfangszeiten (Zeitstempel) gespeichert.

Es versteht sich, dass die Verfolgungsstation 20 zumeist über weitere Einheiten, wie beispielsweise einen Prozessor zur Steuerung der verschiedenen Einheiten sowie über einen Energiespeicher, durch den eine mobile Verwendung erlaubt wird, verfügt. Vorteilhafterweise ist die Verfolgungsstation in ein wasserdichtes und robustes Gehäuse integriert.

Je nach Anwendung ist die Verfolgungsstation 20 bevorzugt stationär ausgeführt. Beispielsweise kann bei einem Marathonlauf oder bei einer anderen Laufsportveranstaltung eine Vielzahl an stationären Verfolgungsstationen entlang der Strecke ausgebracht sein. Stationär ist dabei insoweit zu verstehen, als dass sich die Verfolgungsstation während einer Veranstaltung gegenüber der Strecken nicht bewegt. Die Verfolgungsstationen werden üblicherweise vor der Veranstaltung ausgebracht. Einerseits ist es möglich, dass die Verfolgungsstationen mit einer bestimmten Position manuell initialisiert werden, andererseits ist die automatische Lokalisierung durch eine integrierte Positionseinheit möglich. Die Anzahl und die Dichte der ausgebrachten Verfolgungsstationen sind für die Genauigkeit der Standortverfolgung in der Zentralstation maßgeblich.

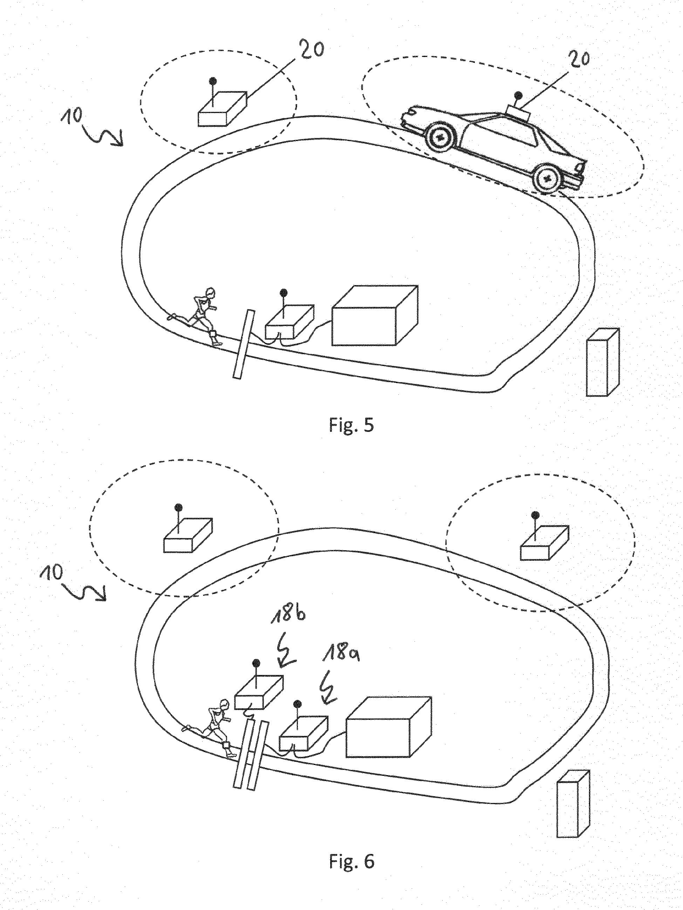

Alternativ ist es auch möglich, dass eine oder mehrere Verfolgungsstationen mobil ausgeführt sind. In Fig. 6 ist die alternative Ausführung einer Verfolgungsstation 20 als mobile Verfolgungsstation dargestellt. Beispielsweise kann eine Verfolgungsstation mit einem GPS-Empfänger auf einem Autodach eines Führungsfahrzeuges bei einem Radrennen angebracht sein. Hierdurch kann kontinuierlich festgestellt werden, welche Fahrradfahrer sich aktuell in einer Führungsgruppe befinden. Wie dargestellt ist es dabei möglich, dass im System 10 eine oder mehrere stationäre Verfolgungsstationen 20 mit einer oder mehreren mobilen Verfolgungsstationen 20 zusammenwirken. Gleichermaßen ist es auch möglich, dass mehrere Verfolgungsstationen nicht entlang einer vordefinierten Strecke angeordnet sind, sondern zufällig in einem bestimmten Gebiet verteilt sind, um in diesem eine Standortverfolgung zu ermöglichen.

In Fig. 6 ist ein erfindungsgemäßes System 10 dargestellt, bei dem eine erste Messstelle 18a zum Übertragen einer Nachricht mit einer Zeitmessinformation vorgesehen ist und eine zweite Messstelle 18b zum Übertragen einer Nachricht mit einer Aktivierungsinformation vorgesehen ist. Generell ist es möglich, dass Aktivierungsinformation und Zeitmessinformation in einer (kombinierten) Nachricht von einer Messstelle übermittelt werden. Ebenfalls ist es möglich, dass an einer Messstelle eine Nachricht mit einer Zeitmessinformation und eine weitere Nachricht mit einer Aktivierungsinformation übermittelt werden. Zuletzt ist es wie in Fig. 6 dargestellt möglich, dass an zwei Messstellen 18a, 18b unterschiedliche Nachrichten übermittelt werden. Die Funktionen sind dabei unabhängig sodass die Reihenfolge, in der die Messstellen 18a, 18b von dem Läufer überquert werden, egal ist. Die beiden Messstellen 18a, 18b können im Wesentlichen identisch zum Übertragen unterschiedlicher Nachrichten ausgeführt sein. Im dargestellten Beispiel sind bei der Messstelle 18a separate Auswerte- und Ausleseeinheiten vorhanden, wobei bei der Messstelle 18b nur eine Ausleseeinheit angeschlossen ist. Andere Aufteilungen sind möglich.

Anwendungen von Systemen zur Zeitmessung erfordern oftmals einen möglichst effizienten Auf-und Abbau der Messstellen (beispielsweise bei eintägigen Laufsportveranstaltungen). Für den Auf- und Abbau kann nicht immer auf geschultes Personal zurückgegriffen werden. Die Aufteilung der Übermittlung der Zeitmessinformation und der Übermittlung der Aktivierungsinformation auf zwei verschiedene Messstellen kann dabei zu einem vereinfachten Aufbau des Systems führen. Zudem kann den Teilnehmern signalisiert werden, dass ab einer bestimmten Stelle auch eine Standortverfolgung durchgeführt wird. Üblicherweise sind dabei die Messstellen 18a, 18b direkt nebeneinander angeordnet. Es ist jedoch ebenfalls möglich, dass eine Standortverfolgung nur auf einem Teil der Strecke vorgesehen ist und dass hierzu die Messstelle 18b, an der der Verfolgungsmodus aktiviert wird, am Beginn dieses Abschnitts positioniert wird.

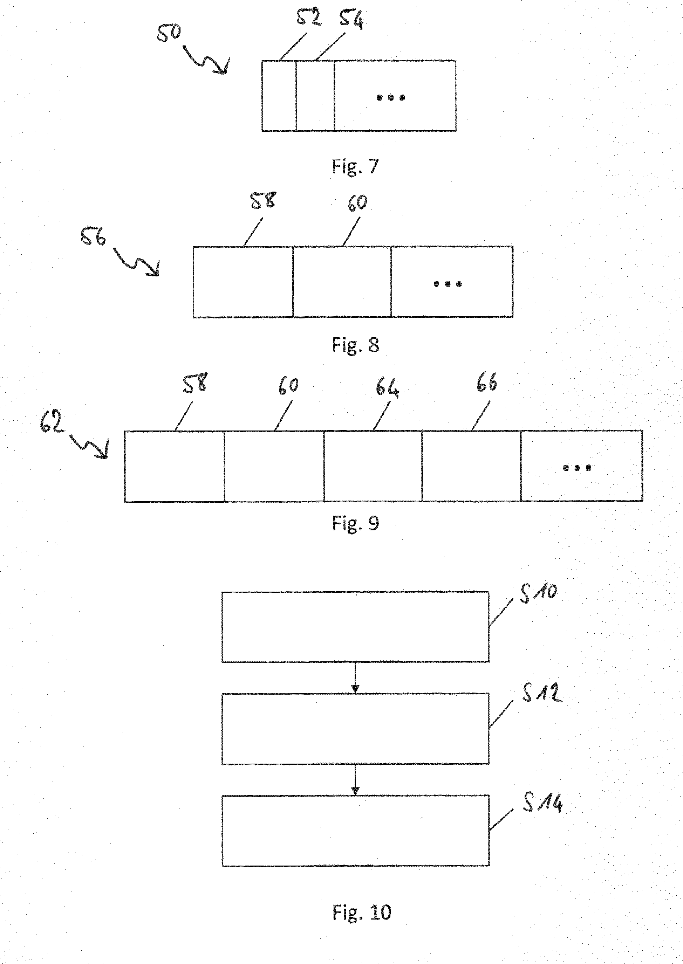

In Fig. 7 ist ein Beispiel für eine Nachricht 50 schematisch dargestellt, wie sie von einer Messstelle an einen mobilen Transponder beim Passieren der Messstelle übermittelt wird. Die Nachricht 50 kann dabei eine Zeitmessinformation 52 und eine Aktivierungsinformation 54 beinhalten. Die Aktivierungsinformation 54 kann vorzugsweise einer 1-Bit Information entsprechen, durch die angezeigt wird, ob der Verfolgungsmodus aktiviert werden soll. Die Zeitmessinformation 52 kann ebenfalls einer 1-Bit Information entsprechen. Hierbei ist es, wie im dargestellten Beispiel möglich, dass die Nachricht 50 sowohl eine Aktivierungsinformation 54 als auch eine Zeitmessinformation 52 enthält. Ebenfalls ist es möglich, dass die Nachricht 50 nur eine Aktivierungsinformation oder nur eine Zeitmessinformation enthält. Weiterhin ist es möglich, dass die Nachricht an sich für die Bestimmung des Passierzeitpunkts der Messstelle verwendet wird, dass also bereits das Vorhandensein der Nachricht als Zeitmessinformation gewertet wird unabhängig vom Inhalt der Nachricht und unabhängig davon, ob zudem noch eine Aktivierungsinformation enthalten ist. Ebenfalls ist es möglich, dass eine Nachricht mit einer Aktivierungsinformation anders aufgebaut ist als eine Nachricht mit einer Zeitmessinformation und dass die Nachrichten getrennt übermittelt werden.

In Fig. 8 ist ein Beispiel für ein Verfolgungspaket 56 schematisch dargestellt. Das Verfolgungspaket 56 wird vom Transponder in einstellbaren Zeitintervallen ausgesendet und umfasst eine Identitätsinformation 58 des Transponders, durch den das Verfolgungspaket im Verfolgungsmodus periodisch ausgesendet wird. Die Identitätsinformation 58 kann beispielsweise einer eindeutigen 4-Byte Hardwareadresse (MAC-ID) entsprechen. Vorteilhafterweise umfasst das Verfolgungspaket 56 zudem eine Zählerinformation 60. Die Zählerinformation 60 kann beispielsweise einer fortlaufenden Nummer zur Nummerierung und Unterscheidung fortlaufend ausgesendeter Verfolgungspakete 56 desselben Transponders entsprechen. Diese fortlaufend ausgesendeten Verfolgungspakete 56 haben dieselbe Identitätsinformation 58. Durch die Zählerinformation 60 können Konflikte vermieden werden, wenn dasselbe Verfolgungspaket 56 von mehreren Verfolgungsstationen empfangen wird.

In Fig. 9 ist ein Beispiel für ein Detektionspaket 62 schematisch dargestellt. Das Detektionspaket 62 wird von einer Verfolgungsstation an die Zentralstation weitergeleitet. Das Detektionspaket ist üblicherweise einem Verfolgungspaket zugeordnet und umfasst die Identitätsinformation 58 sowie die Zählerinformation 60 dieses Verfolgungspakets. Zudem umfasst das Detektionspaket 62 eine Positionsinformation 64 der Verfolgungsstation. Die Positionsinformation 64 umfasst die Position der Verfolgungsstation. Beispielsweise können GPS-Koordinaten als Positionsinformation 64 übermittelt werden. Es ist ebenfalls möglich, dass als Positionsinformation 64 eine eindeutige Kennzeichnung der Verfolgungsstation, die das Detektionspaketen 62 aussendet, beispielsweise eine ID, übermittelt wird. Auf Basis dieser eindeutigen Kennzeichnung kann dann in der Zentralstation eine nachträgliche Zuordnung zu einer Position vorgenommen werden. Das Detektionspakete 62 umfasst weiterhin eine Signalstärkeinformation 66 des empfangenen Verfolgungspakets 56, das durch das Detektionspaket 62 übermittelt wird. Als Signalstärkeinformation 66 kann beispielsweise ein RSSI-Wert (received signal strength indication) dienen. Auf Basis der Signalstärkeinformation 66 kann im weiteren Verlauf beispielsweise auf eine Distanz zwischen Transponder und Verfolgungsstation bei der Übermittlung des Verfolgungspakets geschlossen werden. Zudem wird es ermöglicht mit Situationen umzugehen, in denen dasselbe Verfolgungspaket von mehreren Verfolgungsstationen empfangen wurde.

Wie in Figs. 7-9 dargestellt, können die verschiedenen Nachrichten und Pakete noch weitere Informationen enthalten. Ebenfalls ist es möglich, dass mehrere der Nachrichten oder Pakete zusammengefasst sind, sodass zur effizienteren Datenübertragung mehrere entsprechende Informationen enthalten sind.

In Fig. 10 ist ein Verfahren zu Sportzeitmessung gemäß einem Aspekt der vorliegenden Erfindung schematisch illustriert. Das Verfahren umfasst zunächst einen Schritt des Empfangens (Schritt S10) einer Nachricht beim Passieren einer Messstelle. Weiterhin umfasst das Verfahren einen Schritt des Auswertens (Schritt S12) der Nachricht. Zuletzt umfasst das Verfahren einen Schritt des periodischen Aussendens eines Verfolgungspakets, wenn der Verfolgungsmodus aktiviert ist, und des Übermittelns des Passierzeitpunkts an die Messstelle (Schritt S14).

Das erfindungsgemäße Verfahren kann insbesondere auf einem Mikrocontroller in einem Transponder zur Sportzeitmessung ausgeführt werden. Es ist auch denkbar ein anderes tragbares Gerät (beispielsweise ein Mobiltelefon, eine Smart Watch oder ein Smart Wristband etc.) entsprechend des hierin beschriebenen Verfahrens zu betreiben. Üblicherweise sind die einzelnen Schritte des Verfahrens dabei als Anweisungen in einem Computerprogramm implementiert.

Es versteht sich, dass die vorliegende Erfindung nicht auf den Bereich der Sportzeitmessung limitiert ist. Anwendungsfelder der Erfindung finden sich auch in Bereichen abseits der Sportzeitmessung. Beispielsweise kann der vorliegende Ansatz auch zur Überwachung von Demenzkranken, die eine Pflegeeinrichtung normalerweise nicht verlassen sollen, zur Anwesenheitskontrolle bzw. zur Standortverfolgung von Feuerwehrleuten oder Rettungsdienstkräften bei einem Einsatz (beispielsweise bei einem Einsatz in einem Tunnel) und zur Anwesenheitskontrolle in Betrieben oder in anderen Gebieten verwendet werden. Ganz allgemein kann die vorliegende Erfindung zur Standortverfolgung größerer Populationen von Menschen/Tieren/Maschinen entlang eines mehr oder weniger definierten Pfades oder Rasters verwendet werden. Es versteht sich, dass der erfindungsgemäße Transponder nicht auf die Anwendung in der Sportzeitmessung beschränkt ist.

Insbesondere kann das System der vorliegenden Erfindung auch vorteilhaft verwendet werden, um Feuerwehrleute oder Einsatzkräfte im Rettungswesen während eines Einsatzes zu überwachen. Bei einem Feuerwehreinsatz ist es erforderlich, dass die Positionen der einzelnen Feuerwehrleute möglichst in Echtzeit durch einen Einsatzleiter überwacht werden können. Ebenfalls ist eine Anwesenheitskontrolle erforderlich, beispielsweise beim Betreten und Verlassen eines brennenden Gebäudes. Die Zeitmessung entspricht der Anwesenheitskontrolle. Bei Rettungseinsätzen kann beispielsweise durch die Standortverfolgung von beteiligten Rettungskräften und Patienten eine Verbesserung der Logistik erreicht werden. Das erfindungsgemäße System ermöglicht es, diese Funktionen bereitzustellen. Weitere Anwendungsfelder sind denkbar.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nicht-flüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme, vertrieben werden. Bezugszeichen in den Patentansprüchen sind nicht einschränkend zu verstehen.

## Patentansprüche

1. Mobiler Transponder (12) zur Zeitmessung und Standortverfolgung, mit:
einer Empfangseinheit (26) zum Empfangen einer Nachricht (50) beim Passieren einer Messstelle (18);
einem Prozessor (28) zum Auswerten der Nachricht, um einen Verfolgungsmodus zu aktivieren, wenn die Nachricht eine Aktivierungsinformation (54) enthält, und um einen Passierzeitpunkt der Messstelle zu ermitteln, wenn die Nachricht eine Zeitmessinformation (52) enthält; und
einer Sendeeinheit (30) zum periodischen Aussenden eines Verfolgungspakets (56) mit einer Identitätsinformation (58) zum Empfang durch eine Verfolgungsstation (20) mit bekannter Position in Kommunikationsreichweite (22), wenn der Verfolgungsmodus aktiviert ist, und zum Übermitteln des Passierzeitpunkts an die Messstelle.

2. Mobiler Transponder (12) nach Anspruch 1, wobei die Empfangseinheit (26) zum Auswerten eines induktiven Feldes und zum Empfangen einer Nachricht (50) auf Basis einer Modulation des induktiven Feldes ausgebildet ist.

3. Mobiler Transponder (12) nach einem der vorstehenden Ansprüche, wobei die Empfangseinheit (26) als Aufwach-Empfänger zum Aufwecken des Prozessors (28) aus einem Energiesparmodus bei Erhalt der Nachricht (50) ausgebildet ist.

4. Mobiler Transponder (12) nach einem der vorstehenden Ansprüche, wobei der Prozessor (28) dazu ausgebildet ist den Verfolgungsmodus zu deaktivieren, wenn
die Nachricht (50) eine Deaktivierungsinformation enthält;
die Nachricht für eine erste vordefinierte Zeitperiode keine Aktivierungsinformation (54) enthält; und/oder
ein Energievorrat des mobilen Transponders unter einen vorbestimmten Schwellwert fällt.

5. Mobiler Transponder (12) nach einem der vorstehenden Ansprüche, wobei das Verfolgungspaket (56) eine Zählerinformation (60) zur zeitlichen Einordnung gegenüber weiteren Verfolgungspaketen enthält.

6. Mobiler Transponder (12) nach einem der vorstehenden Ansprüche, wobei die Sendeeinheit (30) als Transceiver, insbesondere als Funktransceiver, zum Empfangen einer Empfangsbestätigung nach dem Aussenden des Verfolgungspaketes (56) und nach dem Übermitteln des Passierzeitpunktes ausgebildet ist.

7. Mobiler Transponder (12) nach Anspruch 6, wobei der Prozessor (28) dazu ausgebildet ist, den Verfolgungsmodus zu deaktivieren, wenn für eine zweite vordefinierte Zeitperiode nach dem Aussenden des Verfolgungspakets (56) keine Empfangsbestätigung empfangen wird.

8. System (10) zur Zeitmessung und Standortverfolgung, mit:
einem mobilen Transponder (12) nach einem der vorstehenden Ansprüche;
mindestens einer Messstelle (18) zum drahtlosen Übertragen einer Zeitmessinformation (52) und einer Aktivierungsinformation (54) in mindestens einer Nachricht (50) an den Transponder beim Passieren der mindestens einen Messstelle;
einer Verfolgungsstation (20) mit bekannter Position zum Empfangen des Verfolgungspakets (56) von einem Transponder in Kommunikationsreichweite (22) und zum Übermitteln eines Detektionspakets (62) mit der Identitätsinformation (58) und einer Positionsinformation (64) der Verfolgungsstation an eine Zentralstation (24); und
einer Zentralstation zum Ermitteln eines Standorts des Transponders basierend auf dem Detektionspaket.

9. System (10) nach Anspruch 8, wobei die mindestens eine Messstelle (18) eine erste Messstelle (18a) zum Übertragen einer Nachricht (50) mit einer Zeitmessinformation (52) an den Transponder (12) beim Passieren der ersten Messstelle und eine zweite Messstelle (18b) zum Übertragen einer Nachricht mit einer Aktivierungsinformation (54) an den Transponder beim Passieren der zweiten Messstelle umfasst.

10. System (10) nach einem der Ansprüche 8 bis 9, wobei die mindestens eine Messstelle (18) zumindest eine der folgenden Einheiten umfasst:
eine Induktionsschleife zum drahtlosen Übertragen von Nachrichten (50) über ein induktives Feld; und
eine Funkschnittstelle zum drahtlosen Empfangen des Passierzeitpunktes und/oder einer Statusinformation zur Angabe eines Status des Verfolgungsmodus des Transponders.

11. System (10) nach einem der Ansprüche 8 bis 10, wobei die Verfolgungsstation (20) als stationäre Verfolgungsstation ausgebildet ist.

12. System (10) nach einem der Ansprüche 8 bis 11, wobei die Verfolgungsstation (20) zumindest eine der folgenden Einheiten umfasst:
eine Positionseinheit (40), insbesondere ein GPS, GALILEO oder GLONASS Empfänger, zum Ermitteln einer Position der Verfolgungsstation;
eine Mobilfunkeinheit (42) zum Weiterleiten des Detektionspakets (62) an die Zentralstation (24);
eine Transceivereinheit (44) zur bidirektionalen Kommunikation mit dem Transponder (12);
eine Zeitbasis (46) zum Ermitteln einer Empfangszeit des empfangenen Verfolgungspakets (56); und
einen Pufferspeicher (48) zum Speichern des empfangenen Verfolgungspakets.

13. Verwendung eines mobilen Transponders (12) nach einem der Ansprüche 1-7 oder eines Systems (10) nach einem der Ansprüche 8-12 zur Zeitmessung und Standortverfolgung von Teilnehmern bei einer Sportveranstaltung.

14. Verfahren zur Zeitmessung und Standortverfolgung bei einem mobilen Transponder nach Anspruch 1, mit den Schritten:
Empfangen (S10) einer Nachricht (50) beim Passieren einer Messstelle (18);
Auswerten (S12) der Nachricht, um einen Verfolgungsmodus zu aktivieren, wenn die Nachricht eine Aktivierungsinformation (54) enthält, und um einen Passierzeitpunkt der Messstelle zu ermitteln, wenn die Nachricht eine Zeitmessinformation (52) enthält; und
periodisches Aussenden (S14) eines Verfolgungspakets (56) mit einer Identitätsinformation (58) zum Empfang durch eine Verfolgungsstation (20) mit bekannter Position in Kommunikationsreichweite (22), wenn der Verfolgungsmodus aktiviert ist, und Übermitteln des Passierzeitpunkts an die Messstelle.

15. Computerprogrammprodukt mit einem Datenträger, auf dem Programmcode gespeichert ist, der dazu ausgebildet ist, ein Verfahren mit den Schritten nach Anspruch 14 auszuführen, wenn der Programmcode auf dem mobilen Transponder nach einem der Ansprüche 1-7 ausgeführt wird.

## Claims

1. Mobile transponder (12) for timing and position tracking, including:
a reception unit (26) for receiving a message (50) when passing a measuring point (18);
a processor (28) for evaluating the message to activate a tracking mode if the message includes activation information (54), and to determine a passing time at which the measuring point is passed if the message includes timing information (52); and
a transmission unit (30) for periodically transmitting a tracking packet (56) including identity information (58) for reception by a tracking station (20) having a known position within communication range (22) if the tracking mode is activated, and for forwarding the passing time to the measuring point.

2. Mobile transponder (12) according to claim 1, wherein the reception unit (26) is configured to evaluate an inductive field and to receive a message (50) on the basis of a modulation of the inductive field.

3. Mobile transponder (12) according to any one of the preceding claims, wherein the reception unit (26) is configured as a wake-up receiver for waking the processor (28) from a power saving mode when the message (50) is received.

4. Mobile transponder (12) according to any one of the preceding claims, wherein the processor (28) is configured to deactivate the tracking mode if
the message (50) includes deactivation information;
the message does not include activation information (54) for a first predefined time period; and/or
an energy supply of the mobile transponder drops below a predefined threshold.

5. Mobile transponder (12) according to any one of the preceding claims, wherein the tracking packet (56) includes numbering information (60) for temporal indexing to distinguish the tracking packet (56) from other tracking packets.

6. Mobile transponder (12) according to any one of the preceding claims, wherein the transmission unit (30) is configured as a transceiver, in particular as a radio transceiver, for receiving an acknowledgment of receipt after transmission of the tracking packet (56) and after forwarding the passing time.

7. Mobile transponder (12) according to claim 6, wherein the processor (28) is configured to deactivate the tracking mode if no acknowledgment of receipt is received for a second predefined time period after transmitting the tracking packet (56).

8. System (10) for timing and position tracking, including:
a mobile transponder (12) according to any one of the preceding claims;
at least one measuring point (18) for wirelessly transmitting timing information (52) and activation information (54) in at least one message (50) to the transponder when the at least one measuring point is passed;
a tracking station (20) with known position for receiving the tracking packet (56) from a transponder within communication range (22) and for transmitting a detection packet (62) with identity information (58) and position information (64) of the tracking station to a central station (24); and
a central station for determining a position of the transponder on the basis of the detection packet.

9. System (10) according to claim 8, wherein the at least one measuring point (18) comprises a first measuring point (18a) for transmitting a message (50) with timing information (52) to the transponder (12) when the first measuring point is passed, and a second measuring point (18b) for transmitting a message with activation information (54) to the transponder when the second measuring point is passed.

10. System (10) according to one of the claims 8 to 9, wherein the at least one measuring point (18) comprises at least one of the following units:
an induction loop for wirelessly transmitting messages (50) via an inductive field; and
a wireless interface for wirelessly receiving the passing time and/or status information describing a status of the tracking mode of the transponder.

11. System (10) according to one of the claims 8 to 10, wherein the tracking station (20) is configured as a stationary tracking station.

12. System (10) according to one of the claims 8 to 11, wherein the tracking station (20) comprises at least one of the following units:
a position unit (40), in particular a GPS, GALILEO or GLONASS receiver, for determining a position of the tracking station;
a mobile radio unit (42) for transmitting the detection packet (62) to the central station (24);
a transceiver unit (44) for bidirectional communication with the transponder (12);
a time base (46) for determining a time of receipt of the received tracking packet (56); and
a cache memory (48) for storing the received tracking packet.

13. Use of a mobile transponder (12) according to any one of the claims 1-7 or of a system (10) according to any one of the claims 8-12 for timing and position tracking of participants at a sports event.

14. Method for timing and position tracking with a mobile transponder according to claim 1, comprising the steps:
receiving (S10) a message (50) when passing a measuring point (18);
evaluating (S12) the message to activate a tracking mode if the message includes activation information (54), and to determine a passing time at which the measuring point is passed if the message includes timing information (52); and
periodically transmitting (S14) a tracking packet (56) including identity information (58) for reception by a tracking station (20) having a known position within communication range (22) if the tracking mode is activated, and forwarding the passing time to the measuring point.

15. Computer program product with a data carrier on which program code is stored, which is designed to carry out a method with the steps according to claim 14 when the program code is executed on the mobile transponder according to any one of the claims 1-7.

## Revendications

1. Transpondeur mobile (12) pour la mesure du temps et le suivi de position, comprenant :
une unité de réception (26) pour recevoir un message (50) lors du passage par un point de mesure (18) ;
un processeur (28) pour évaluer le message pour activer un mode de suivi si le message contient une information d'activation (54) et pour déterminer un instant de passage par le point de mesure si le message contient une information de mesure de temps (52) et
une unité d'émission (30) pour émettre périodiquement un paquet de suivi (56) avec une information d'identité (58) pour réception par une station de suivi (20) avec une position connue à portée de communication (22) si le mode de suivi est activé et pour transmettre l'instant de passage au point de mesure.

2. Transpondeur mobile (12) selon la revendication 1, l'unité de réception (26) étant conçue pour évaluer un champ inductif et pour recevoir un message (50) sur la base d'une modulation du champ inductif.

3. Transpondeur mobile (12) selon l'une des revendications précédentes, l'unité de réception (26) étant conçue en tant que récepteur de réveil pour réveiller le processeur (28) d'un mode d'économie d'énergie à la réception du message (50).

4. Transpondeur mobile (12) selon l'une des revendications précédentes, le processeur (28) étant conçu pour désactiver le mode de suivi si :
le message (50) contient une information de désactivation ;
le message ne contient pas d'information d'activation (54) pour une première période de temps prédéfinie ; et/ou
une réserve d'énergie du transpondeur mobile tombe en dessous d'une valeur seuil prédéterminée.

5. Transpondeur mobile (12) selon l'une des revendications précédentes, le paquet de suivi (56) contenant une information de compteur (60) pour classification temporelle par rapport à d'autres paquets de suivi.

6. Transpondeur mobile (12) selon l'une des revendications précédentes, l'unité d'émission (30) étant conçue en tant qu'émetteur-récepteur, et plus particulièrement en tant qu'émetteur-récepteur radio, pour recevoir une confirmation de réception après l'émission du paquet de suivi (56) et après la transmission de l'instant de passage.

7. Transpondeur mobile (12) selon la revendication 6, le processeur (28) étant conçu pour désactiver le mode de suivi si aucune confirmation de réception n'est reçue pour une deuxième période de temps prédéfinie après l'émission du paquet de suivi (56).

8. Système (10) de mesure du temps et de suivi de position, comprenant :
un transpondeur mobile (12) selon l'une des revendications précédentes ;
au moins un point de mesure (18) pour la transmission sans fil d'une information de mesure de temps (52) et d'une information d'activation (54) dans au moins un message (50) au transpondeur lors du passage par l'au moins un point de mesure ;
une station de suivi (20) avec une position connue pour recevoir le paquet de suivi (56) d'un transpondeur à portée de communication (22) et pour transmettre un paquet de détection (62) avec l'information d'identité (58) et une information de position (64) de la station de suivi à une station centrale (24) ; et
une station centrale pour déterminer une position du transpondeur sur la base du paquet de détection.

9. Système (10) selon la revendication 8, l'au moins un point de mesure (18) comprenant un premier point de mesure (18a) pour la transmission d'un message (50) avec une information de mesure de temps (52) au transpondeur (12) lors du passage par le premier point de mesure et un deuxième point de mesure (18b) pour la transmission d'un message avec une information d'activation (54) au transpondeur lors du passage par le deuxième point de mesure.

10. Système (10) selon l'une des revendications 8 à 9, l'au moins un point de mesure (18) comprenant au moins une des unités suivantes :
une boucle d'induction pour la transmission sans fil de messages (50) via un champ inductif et
une interface radio pour la réception sans fil de l'instant de passage et/ou d'une information de statut pour indiquer un statut du mode de suivi du transpondeur.

11. Système (10) selon l'une des revendications 8 à 10, la station de suivi (20) étant réalisée en tant que station de suivi stationnaire.

12. Système (10) selon l'une des revendications 8 à 11, la station de suivi (20) comprenant au moins l'une des unités suivantes :
une unité de position (40), et plus particulièrement un récepteur GPS, GALILEO ou GLONASS, pour déterminer une position de la station de suivi ;
une unité radio mobile (42) pour retransmettre le paquet de détection (62) à la station centrale (24) ;
une unité d'émission-réception (44) pour la communication bidirectionnelle avec le transpondeur (12) ;
une base de temps (46) pour déterminer un temps de réception du paquet de suivi reçu (56) et
une mémoire tampon (48) pour sauvegarder le paquet de suivi reçu.

13. Utilisation d'un transpondeur mobile (12) selon l'une des revendications 1-7 ou d'un système (10) selon l'une des revendications 8-12 pour la mesure du temps ou le suivi de position de participants d'une manifestation sportive.

14. Procédé de mesure du temps et de suivi de position dans le cas d'un transpondeur mobile selon la revendication 1, comprenant les étapes suivantes :
réception (S10) d'un message (50) lors du passage par un point de mesure (18) ;
évaluation (S12) du message pour activer un mode de suivi si le message contient une information d'activation (54) et pour déterminer un instant de passage par le point de mesure si le message contient une information de mesure de temps (52) et
émission périodique (S14) d'un paquet de suivi (56) avec une information d'identité (58) pour réception par une station de suivi (20) avec une position connue à portée de communication (22) si le mode de suivi est activé, et transmission de l'instant de passage au point de mesure.

15. Produit de programme informatique avec un support de données sur lequel est sauvegardé un code de programme qui est réalisé pour exécuter un procédé comprenant les étapes selon la revendication 14 lorsque le code de programme est exécuté sur le transpondeur mobile selon l'une des revendications 1-7.
